# EUROPEAN PATENT APPLICATION

(11) **EP 3 816 891 A1**
(43) Date of publication of application: **05.05.2021**
(21) Application number: 20205259.3
(22) Date of filing: 02.11.2020
(51) Int. Cl.: G06Q 10/06

(54) **BEHAVIORAL PROFILING WITH ACTIONABLE FEEDBACK METHODOLOGIES AND SYSTEMS**

(30) Priority: 31.10.2019 US 201962928681 P; 11.11.2019 US 201916680202
(71) Applicant: Swarm Vision, Inc., Los Altos, California 94023 (US); Briganti, Suzan, Menlo Park, California 94025 (US); Dechow, Katherine Laraine, Menlo Park, California 94025 (US); Samson, Alain, Menlo Park, California 94025 (US)
(72) Inventor: Briganti, Suzan, Menlo Park, California 94025 (US); Dechow, Katherine Laraine, Menlo Park, California 94025 (US); Samson, Alain, Menlo Park, California 94025 (US)
(74) Representative: Mollekopf, Gerd Willi

(57) **Abstract**

Behavioral profiling with actionable feedback methodologies and systems is provided. Benchmarking of profiles against empirical data can be utilized to determine areas of weakness in profiles or asymmetries relative to a benchmark. Feedback methodologies allow for optimization of individualized profiles and re-evaluation of behavioral profiling based on empirical data, as well as optimal profile grouping.

## Description

### BACKGROUND

### Field of the Invention

The present disclosure is related in general to behavioral profiling, and more specifically, but not by limitation to systems and methods that utilize databases and identify asymmetries in profiles, and remediate the same using actionable feedback methodologies.

### SUMMARY

The invention is defined in claims 1, 6 and 10, respectively. Particular embodiments are set out in the dependent claims.

According to some embodiments, the present disclosure is directed to a method that comprises: (a) creating database records that comprise an innovation profile for a plurality of individuals, the innovation profile being indicative of an innovation score for each of the plurality of individuals, wherein the innovation score is a composite of an innovator score and an intrapreneur score; (b) identifying a portion of the plurality of individuals having an innovation score that does not meet or exceed an innovator benchmark score or general population score; (c) generating feedback that improves the innovation score for the portion of the plurality of individuals that does not meet or exceed an innovator benchmark score or general population score; (d) re-evaluating the innovation profile for the plurality of individuals; (e) updating database records with the re-evaluated innovation profiles; and (f) generating a report for a manager of the team when the innovation profile for the plurality of individuals in the team meets or exceeds the innovator benchmark score or the general population score. In other embodiments a report is generated whether or not the user's innovation score meets or exceeds a benchmark or that of the general population. The report is not constrained to just those exceeding or not exceeding the benchmark or general population, as a report is generated for all users. Further, any user can obtain an individual report, and any user may be enrolled in training, regardless of their scores.

According to some embodiments, the present disclosure is directed to a method that comprises: (a) a step for creating database records that comprise an innovation profile for a plurality of individuals in a team, the innovation profile being indicative of an innovation score for each of the plurality of individuals, wherein the innovation score is a composite of an entrepreneur score and an intrapreneur score; (b) a step for identifying a portion of the plurality of individuals having innovation scores that do not meet or exceed an innovator benchmark score or general population score; (c) a step for generating feedback that improves the innovation score for the portion of the plurality of individuals that does not meet or exceed an innovator benchmark score or general population score; (d) a step for re-evaluating the innovation profile for the plurality of individuals; (e) a step for updating database records with the re-evaluated innovation profiles; and (f) a step for generating a report for a manager of the team when the innovation profile for the plurality of individuals in the team meets or exceeds the innovator benchmark score or the general population score. As provided above, in other embodiments a report is generated for all users, any user can obtain an individual report, and any user may be enrolled in training, regardless of their scores.

According to some embodiments, the present disclosure is directed to a system that comprises: (a) a memory for storing instructions; and (b) a processor for executing the instructions to: (i) (a) provide an innovation profile assessment to a plurality of individuals accessible through a web browser interface; (b) create database records that comprise an innovation profile for the plurality of individuals; (c) assigning to an individual a skill type selected from optimizer, energizer, explorer, and transformer, based on the innovation profile; (d) generating a team from individuals of the plurality of individuals by: (i) receiving a project associated with one or more innovation skill groups; and (ii) automatically selecting the team by matching roles assigned to the individuals against the innovation skill groups of the project by querying the database records. It will be appreciated that in addition to fully automated team selection, team selection can also be achieved through a software-assisted but manual process, as well as through a human-assisted software-driven process. In some embodiments, instead of the system receiving a project, individuals receive information about their innovation horizon which can be used later in assigning them to projects or teams.

According to some embodiments, the present disclosure is directed to a method that comprises: (a) testing a sample of participants to determine each participant's aptitude for at least one innovation skill by (b) generating at least one question predictive of a respondent's aptitude for the at least one innovation skill; (c) administering the at least one question to the respondent; (d) analyzing the respondent's response to the at least one question. The method can also comprise (e) scoring the respondent's aptitude for the at least one innovation skill; (f) based on the scoring, determining whether the respondent should be a team member and for what role the member is best suited, and (g) determining whether the respondent would benefit from training to address areas of weakness in their innovation skills. It should be noted that the team analysis is an optional step.

### BRIEF DESCRIPTIONS OF THE DRAWINGS

The accompanying drawings, where like reference numerals refer to identical or functionally similar elements throughout the separate views, together with the detailed description below, are incorporated in and form part of the specification, and serve to further illustrate embodiments of concepts that include the claimed disclosure, and explain various principles and advantages of those embodiments.

The methods and systems disclosed herein have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.
FIG. 1 is a flowchart of an example method for creating a survey in accordance with the present disclosure.
FIG. 2 is a flowchart of an example method for analyzing plurality of individuals in a team for innovation skills.
FIG. 3 is a flowchart of a feedback method implemented within a Profiler system of the present disclosure.
FIG. 4 is a flowchart of a method of generating an innovation score report for an individual.
FIG. 5A is a screenshot of an example graphical representation of an innovation score, innovator benchmark score, and general population score.
FIG. 5B is an exemplary graphical representation of an innovation profile.
FIGS. 6A and 6B collectively illustrate a sample report that can be transmitted along with the graphical representation of FIG. 5A.
FIGs. 6C and 6D provide an exemplary summary of a user's innovation talents.
FIG. 7A is an example graph that illustrates an individual's scores compared against benchmark values.
FIGs. 7B-7F illustrate displays of individual reporting of a user's top three and emerging three innovation talents.
FIG. 8 is an example matrix that represents selections by a Profiler system of an optimal innovation team, selected in accordance with the present disclosure.
FIG. 9 is a flowchart of an example method of the present disclosure.
FIG. 10 is a schematic diagram of an example computer device that can be utilized to implement aspects of the present technology.
FIG. 11 is a flowchart of another example method of the present disclosure.
FIG. 12 is a flowchart of another example method of the present disclosure.
FIG. 13 shows an exemplary display of a distribution of a plurality of individuals by the innovation type.
FIG. 14 shows an exemplary display of a group classified by innovation horizon.
FIG. 15 shows an exemplary display of innovation scores by job function.
FIG. 16 shows an exemplary display of average innovation scores displayed by region on a map.
FIG. 17 shows an exemplary plot of average innovation scores by year of hire for a plurality of individuals.
FIG. 18A and 18B show the plurality of individuals classified according to different filters.
FIGs. 19-22 illustrate plots of averaged innovation skills for a plurality of individuals for each of 8 skill-clusters.
FIG. 23 lists exemplary innovation scores, skill-cluster scores and top 3 skills for a plurality of individuals.
FIGs. 24-26 illustrate exemplary displays of different ways to sort the information in FIG. 23.
FIG. 27 shows an exemplary selection of a file format to export innovation scores for a plurality of individuals.
FIG. 28A illustrates downloading innovation scores for the plurality of individuals to the file format selected in FIG. 27.
F28B illustrates an exemplary display of filter the table of FIG. 28A to see pre- and post-training scores for individuals.
FIG. 29 shows a display of an exemplary ranking of individuals by innovation score.
FIG. 30 illustrates the list of FIG. 29 being downloaded to a selected file format.
FIG. 31 is an exemplary display of average innovation skill scores for a plurality of individuals.
FIG. 32 is a flowchart representation of another method of the present disclosure directed to improving the innovation abilities of a plurality of individuals.
FIG. 33 shows an exemplary interface for setting goals.
FIG. 34 shows an exemplary graphical representation of a company's innovation score relative to different industry sectors.
FIG. 35 shows an exemplary graphical representation of a company's innovation score relative to different populations.
FIG. 36 shows a graphical interface for managing access to an online training course.
FIG. 37 shows an exemplary confirmation screen.
FIG. 38 illustrates a 3rd party LMS system.
FIG. 39 is a flowchart representation of another method of the disclosure for determining a return on investment for training.
FIG. 40 shows an exemplary display of a change in innovation scores for a plurality of individuals both pre- and post-training.
FIG. 41 is a display of an exemplary determination of monetary value of innovation proposals submitted through an innovation training.
FIG. 42 is a display of an exemplary determination of innovation horizons of innovation proposals submitted through the innovation training.
FIG. 43 is a display of an exemplary determination of a change in innovation horizons for a plurality of individuals pre- and post-training.
FIGs. 44A-44E are exemplary displays pertaining to company innovation culture.
FIGs. 45A-45D are exemplary displays pertaining to company innovation system.
FIG. 46 is a graphical representation of another method of the present disclosure for creating, analyzing and improving teams.
FIGs. 47-51 provide graphical representations of another method of the present disclosure for creating, analyzing and improving teams.
FIG. 52 is a flowchart representation of another method of the present disclosure for creating teams.
FIG. 53 is a graphical display according the method of FIG. 52.
FIGs. 54-57 are graphical representations of further steps of the method of FIG. 52.
FIG. 58 is a flowchart representation of another method of the present disclosure for selecting candidates for job openings.
FIGs. 59-63 are graphical representations of further steps of the method of FIG. 58.

### DETAILED DESCRIPTION

Embodiments of the present disclosure are directed to behavioral profiling with actionable feedback methodologies and systems. Benchmarking of profiles against empirical data can be utilized to determine areas of weakness in profiles. Feedback methodologies allow for optimization of individualized profiles and re-evaluation of behavioral profiling based on empirical data.

According to some embodiments, a Profiler system can implement an algorithm that considers an individual's responses to various survey questions for each role (entrepreneur, intrapreneur, champion, and implementer) and for each of eight skill clusters and 26 sub-clusters. The algorithm includes assigning weights to each of these questions based on how well they differentiate the individual versus general population scores, and how well the scores correlate with business results (project types). The algorithm implements an acquiescence filter that detects and adjusts for an individual's high inclination to agree with all questions, even reverse-coded questions that flags and adjusts for individuals answering in such a way as to conform to generally desirable social traits (expectations or norms).

The results are automatically converted to an index. In various embodiments the "Innovator Benchmark" is calculated as the median score for the Top 30% of innovators, while in other embodiments it is calculated as the 80th percentile for the innovators, but can be set anywhere in between. In some embodiments, individual results are shown compared to the Innovator Benchmark.

Some embodiments of the present disclosure relate to systems and methods for creating an innovational or entrepreneurial team. Successful innovation or entrepreneurship is often driven by individuals with a range of skills. A single individual typically does not possess all of these skills, and teams of innovators or entrepreneurs are most likely to be successful if their members possess complementary skills. Through research and development, questionnaires can be developed to categorize respondents according to their innovative or entrepreneurial skill sets. Such categorization enables startup founders, enterprises, or crowdsourcing communities to build innovation or entrepreneurial teams that possess the necessary and appropriate skills to attain their innovation or entrepreneurial goals.

Each participant's test results may be scored along two dimensions--a prolificacy scale and a disruption scale. The same group of participants may also be asked to answer a series of self-descriptive questions relating to traits commonly associated with innovators, such as curiosity, independent thinking, impatience with the status quo, accomplishment in the visual arts, scientific inquiry or inventions, number of social connections and social influence. The participants' answers may be cross-referenced and correlated with their respective idea prolificacy and disruption scores. In some embodiments, the self-descriptive questions that correlate highly with high prolificacy and disruption scores are retained, while questions with a low correlation are discarded. The retained self-descriptive questions may be presented to participants in, for example, a crowdsourcing community, to identify individuals with a high capacity for generating novel ideas. A similar method may be utilized to identify individuals with a high capacity for optimizing ideas, communicating ideas, and popularizing ideas, among others. A questionnaire comprising self-descriptive questions selected through application of the above method is presented to respondents, and the respondents' innovation skills are identified based on their answers to the questionnaires, according to some embodiments. The order of questions presented to each respondent may be randomized to eliminate order bias.

According to various embodiments, a sample of successful innovators and advisors familiar with innovators are interviewed to determine the innovators' motivations, attitudes, beliefs, and behaviors from the innovators' point of view. The sample included entrepreneurs, who are founders or co-founders of a business, and intrapreneurs, who have created a new product or business within an existing organization. Based on results of the interviews and existing academic research, hypotheses regarding the main traits of entrepreneurs and intrapreneurs may be generated. Questions relating to each of the hypotheses may then be generated, and an initial survey comprising the generated questions may be prepared. The initial survey may be fine-tuned by presenting the survey to a sample of entrepreneurs and intrapreneurs and determining the predictive power of each question.

The survey may be further tested on a large sample that may include participants from various geographical regions in different stages of economic development and with divergent cultures. In some embodiments, the results are analyzed to identify the following: (1) self-descriptive questions that correlated with objective questions for entrepreneurs, intrapreneurs, and innovation implementers, (2) self-descriptive questions that best differentiated entrepreneurs, intrapreneurs, and innovation implementers from the general population and from each other, (3) questions that statistically correlated with one another into clusters that may identify specific skill sets, and (4) how application of filters for business results and inventions focuses the entrepreneurial profile. The survey may be further improved by implementing a second global study.

In some embodiments, a Profiler system utilizes survey questions that elicit responses from individuals in an organization or group. The questions are constructed to determine innovation skills of the respondents.

As used herein, "innovation skills" may include an individual's skills (e.g., for, lateral thinking, drawing connections, or for generating ideas, optimizing ideas, communicating ideas, or popularizing ideas), attitudes (e.g., perseverance, confidence,), motivations (e.g., desire to change the world or challenge the status quo), and other behavioral/personality traits (e.g., social intelligence, detail orientation, competitiveness, adaptability, or intensity).

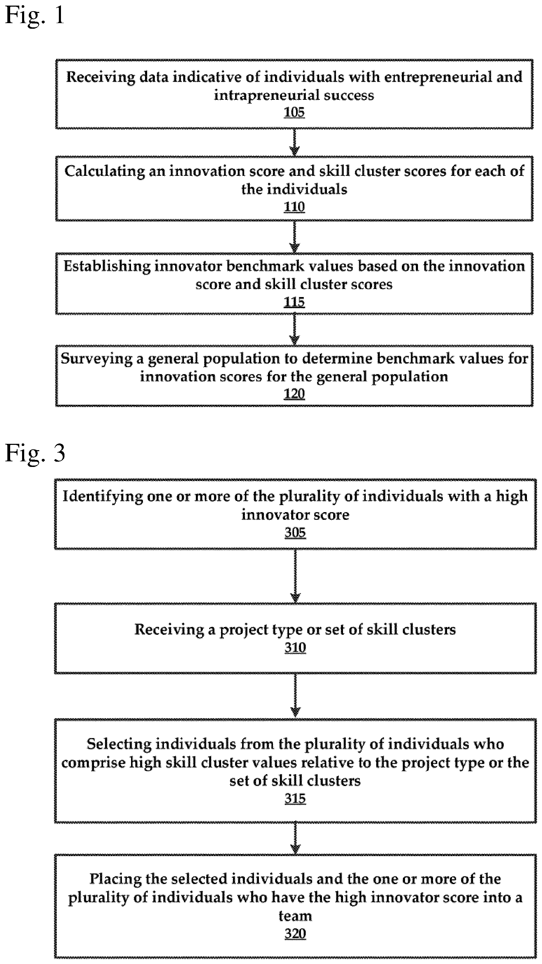

According to some embodiments, the present disclosure is directed to systems and methods that implement and utilize behavioral profiling and actionable feedback loops to identify innovation characteristics of individuals in enterprises and organizations. FIG. 1 is a flowchart of an example method for creating a survey. The method includes a step 105 of receiving data indicative of individuals with entrepreneurial and intrapreneurial success, as described above. In general, the method and system, in some embodiments, is configured to suggest or create optimal innovation teams based on behavior profiling and benchmarking across various skill clusters and sub-clusters. Thus, the method and system will produce a more effective innovation team compared to processes that do not utilize the behavior profiling and analysis described herein.

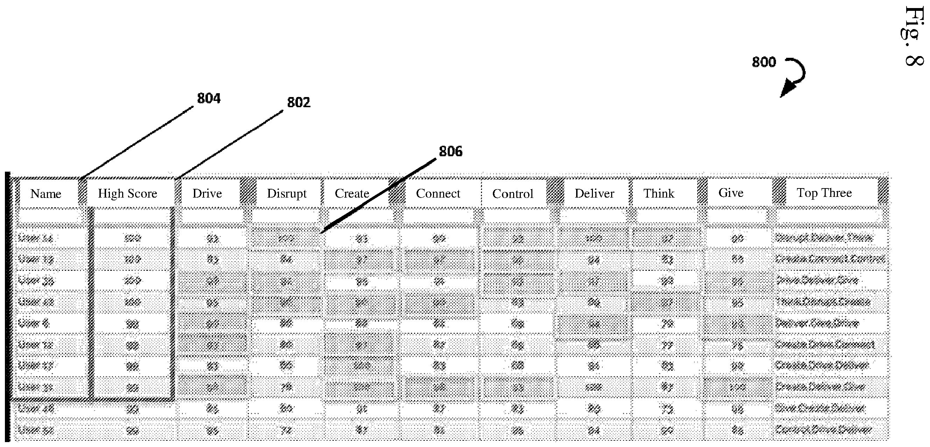

The method can be executed within the context of a Profiler system. Some aspects of the Profiler system are described with reference to FIG. 8. Functional aspects of the Profiler system are described throughout the present disclosure.

Once the relevant data has been collected with the Profiler system, the method can include a step 110 of calculating an innovation score and skill clusters for each of the individuals. The method can also include a step 115 of establishing innovator benchmark values based on the innovation score and skill clusters. Again, these benchmark values are created based on individuals with entrepreneurial and intrapreneurial success.

In a sub-process, the method can include a step 120 of surveying a general population to determine benchmark values for innovation scores for the general population.

Thus, each individual analyzed by the Profiler system can be compared against an innovation benchmark score for (1) individuals with entrepreneurial and intrapreneurial success; and (2) general population individuals.

In various embodiments, a final version of the survey comprising questions generated through the above method is presented to employees of innovating enterprises, prospective members of founding teams, or any other group to identify each respondent's innovation or entrepreneurial skill sets. This enables founders, investors, and enterprises to build innovational or entrepreneurial teams with the appropriate skill sets to maximize the likelihood of success of innovative endeavors. Additionally, by administering the survey to an existing entrepreneurial team, investors may be able to determine the likelihood of success of the entrepreneurial team and decide whether or not to provide funding to the team.

In an example embodiment, individuals in an organization are surveyed to create innovation profiles. To be sure, while the individuals can be from an organization, the present disclosure can be used on any population, including in a crowd-based application where individuals in any geographical location can be profiled for their innovation attributes.

In some embodiments, the innovation profile is indicative of an innovation score for each of the plurality of individuals. The innovation score in some instances is a composite of an entrepreneur score and an intrapreneur score for the individual.

Entrepreneurs are defined as people who found or co-found new businesses outside of any existing structures. Intrapreneurs are people who create new products and businesses within existing organizations. An individual's survey results show how they score on an overall innovation benchmark index, as well as their scores on eight skill clusters and 26 sub-clusters, in some embodiments.

The individual receives their personal results, along with a user-friendly interpretation guide. The management report is sortable, enabling managers to identify individuals with strengths in a particular skill cluster, to strengthen teams at various stages of the innovation journey (as illustrated in FIG. 8).

By definition, an entrepreneur score is a mathematical representation of behavioral traits of individuals who start or co-found businesses. Within an existing enterprise, these individuals may be best suited to efforts where there is a higher degree of autonomy and financial up-side. Skill clusters associated with an entrepreneur include drive, control, and create. Additional aspects of skill clusters are provided in greater detail infra.

An intrapreneur score is a mathematical representation of behavioral traits of individuals who create new products and businesses within existing organizations. These individuals are well-suited to leading internal innovation projects and teams in complex organizational structures. Skill clusters associated with an intrapreneur include disrupt, connect, and think.

An implementer score is a mathematical representation of behavioral traits of individuals who excels as part of a team implementing innovations, regardless of whose idea it is. These individuals can take an ambitious challenge, limited direction, and navigate their way to get it done. Skill clusters associated with an implementer include deliver and think.

A champion score is a mathematical representation of behavioral traits of individuals who helps to drive an innovation culture, and engages others in an innovation movement. These individuals are useful for training and coaching employees on innovation skills and engaging them in innovation challenges. Skill clusters associated with a champion include connect and give.

Each of these scores is comprised of various skill clusters and skill clusters are, in turn, comprised of skill sub-clusters. Examples of skill clusters comprise drive, create, disrupt, control, connect, deliver, think, and give.

In one embodiment, skill clusters associated with drive include ambition (actively looking for problems to solve), initiative (initiates new endeavors more easily and more often than others), intensity (relates to focus and understanding of problems and how things work, as well as initiatives to learn new things), and persistence (confidence during opposition or challenges).

Skill clusters associated with disrupt include boundary breaking, thriving in uncertainty, and self-confidence. Skill clusters associated with disrupt include novelty-seeking, problem-solving, uncommon connections, and growth mindset. Skill clusters associated with connect include relating, persuading, team-building, and social intelligence. Skill clusters associated with control include 360-degree involvement, competitiveness, and financial orientation. Skill clusters associated with think include information capacity, rapid pattern recognition, and reflection. Skill clusters associated with deliver include contextual goal-orientation, resourcefulness, and adaptability. Skill clusters associated with give include benefiting others and making the world better.

The Profiler system can provide each individual with a survey that comprises questions that solicit information from an individual that correspond to the skill clusters and their corresponding skill sub-clusters. The questions are generated from interviews or surveys obtained from known innovators and entrepreneurs. Thus, the methodologies of the present disclosure can improve or evolve as a knowledge base from innovators and entrepreneurs grows. This information can also be used to weight questions within a survey so that questions relating to skill sub-clusters that are highly indicative of the skill associated with the skill clusters/sub-clusters are weighed more heavily than questions that are less indicative of the skill cluster.

It will be understood that weighting is based on correlation between each question and known innovators with business results. Clustering is a sub-level of the aspect of the present disclosure where the strongest N questions were clustered based on factor analysis, in some embodiments.

An example question related to the skill of deliver includes "I can easily embrace a new direction if the first direction I've begun is not working out." An example question related to the skill of connect includes "I am able to excite and inspire others with my ideas." Each skill will have a plurality of questions that can each be weighted.

These questions are merely exemplary and will be tailored by the data within the knowledge base obtained from innovators and entrepreneurs.

To calculate a skill score, the Profiler system will sum the weighted values determined for each question answered. In some embodiments, the skill score is adjusted using an acquiescence adjustment score "AAS" (multiplying coefficient), which accounts for proclivities of an individual.

According to some embodiments, generating the innovation profile involves providing a plurality of questions to an individual, where each of the questions comprises a weighting as mentioned above. For each role/skill, the Profiler system calculates an item score for at least a portion of the plurality of questions by multiplying the item score with the weighting. Next, the Profiler system calculates a total score for a skill by summing each of the item scores. In some embodiments, a weighted item score comprises an acquiescence adjustment score multiplied by an acquiescence adjustment score factor.

In one embodiment, the Profiler system gathers basic information about the respondent's demographics, along with a core of 108 psychographic questions. The Profiler system can include a set number of filler items that are used as decoys.

The AAS measures an individual's degree of acquiescence ("yes-saying" or the tendency to agree with statements, regardless of their content), a type of response bias that may occur in surveys. The technique adjusts individual innovation role scores based on responses to several pairs of questions where agreement with both items can be considered contradictory (e.g., "I like to surround myself with people from diverse backgrounds" versus "Iprefer to associate with people who are similar to me ... "), taking into account the known proportion of variance in the overall score that can be explained by the AAS.

Entrepreneur, intrapreneur and the overall innovator scores contain items that are most strongly associated with actual entrepreneurship and intrapreneurship. Items are also assigned weights based on the strength of their relationship with objective business results. The implementer score includes items that are most strongly associated with objectively defined professional experience around building and operationalizing innovations (e.g., having worked on implementing someone else's new product/service; innovation; having occupied roles in research and development, new product design, and so forth). Finally, the champion score consists of items that best represent skills around using and building the social/cultural environment that allows innovation to flourish in an organization.

Once innovation profiles have been generated for individuals (one or many) in an organization or other group (including a crowd implementation), the innovation profile can be parsed to determine individuals and groups who are high scoring and/or low scoring by skill clusters/sub-clusters.

Other feedback and/or analyses provided by the Profiler system include identification of individuals in a team that have low scores on specific skills and skill clusters. The Profiler system can then use a feedback loop to suggest automated, computerized training programs that will assist the individuals in improving their scores in the relevant skills and skill clusters. In another feedback loop the Profiler system can identify individuals from a remaining pool of individuals in the organization who have skill and skill cluster scores that excel in the relevant (e.g., low) skill clusters. According to some embodiments, the system can maintain and access one or more training libraries that comprise training instruction in digital format. Each instance of training instruction can be tagged with skill tags that allow the library to be searched for training on at the skill level. For example, if the Profiler system determines that an individual is not meeting or exceeding the benchmark scores in drive or disrupt skill clusters, the system can search the library for training instruction that is tagged with skill clusters of drive and disrupt and automatically deliver the required training. In an alternative to benchmark scores, target scores can be used, where target scores are set by the leader according to the needs of the team. It will be understood that wherever "benchmark" is used herein, target or desired scores can be employed in the alternative.

In one embodiment, the granularity of this process is adjustable so that training can be provisioned to an individual based on skill sub-clusters. For example, if the system determines that an individual is not benchmarking in persistence, the Profiler system can search and retrieve library content on persistence training.

The Profiler system can also retest the individual during and after training is complete, in order to re-score the individual and assess improvement. In some embodiments, when the individual is retested, the system will selectively adjust the questions so that the individual is presented with new questions that test the skill sub-cluster or skill cluster in general. Thus, the Profiler system can improve the performance of an enterprise at the individual level, as well as a team and/or organization level.

By way of example, the Profiler system can select a second portion (one or more individuals) of the plurality of individuals that can replace a portion of the plurality of individuals having an innovation score that does not meet or exceed an innovator benchmark or general population score. The second portion includes individuals that have an innovation score that meets or exceeds the innovator benchmark and the general population score. In this method, the Profiler system is configured to improve the composition or makeup of a team, which ensures improved innovation performance in the enterprise or organization.

In another embodiment, the Profiler system can create an optimal innovation team that includes a selection of a plurality of individuals with highest innovation scores that cover eight skill clusters comprising drive, create, disrupt, control, connect, deliver, think, and give. Thus, the plurality of individuals forms a team that is well rounded in all relevant skill areas/clusters. Again, the Profiler system can further tailor the selection of the individuals based on a project type and/or innovation stage.

In yet another embodiment, an optimal innovation team is determined based on a list of functional skills required for the team as well as their innovation profiles. For example, the Profiler system can build a functionally-balanced team that also requires innovation skills which can be selected from any of the innovation skills described herein.

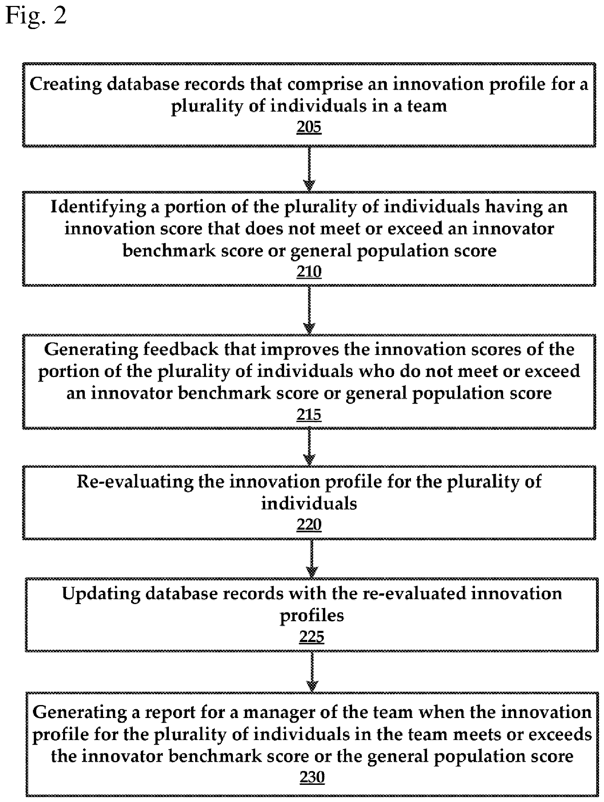

FIG. 2 is a flowchart of an example method of the present disclosure. In one embodiment a method includes a step 205 of creating database records that comprise an innovation profile for a plurality of individuals in a team. The innovation profile is generated using the survey process described above. The method includes a step 210 of identifying a portion of the plurality of individuals having an innovation score that does not meet or exceed an innovator benchmark score or general population score.

The method further comprises a step 215 of generating feedback that improves the innovation scores of the portion of the plurality of individuals who do not meet or exceed the targeted or desired innovation scores. In other embodiments, feedback is generated that improves the innovation scores of the individual, team or organizational unit to better meet its innovation objectives. Numerous examples of feedback are described above in greater detail such as identifying weak skill areas or individuals in the same organization or population that have skill values that meet or exceed the targeted or desired innovation scores. While the method involves the use of innovator scores, the Profiler system can operate on a more granular level and use skill cluster/skill sub-cluster values in its analysis. In still other embodiments, step 215 comprises generating feedback to individuals so that they develop in ways that will complement the team, so that the team as a whole has coverage of all 8 skills and even the 26 sub-skills.

In some embodiments, the method includes a step 220 of re-evaluating the innovation profile for the plurality of individuals and a step 225 of updating database records with the re-evaluated innovation profiles. In various embodiments, re-evaluation occurs only after training.

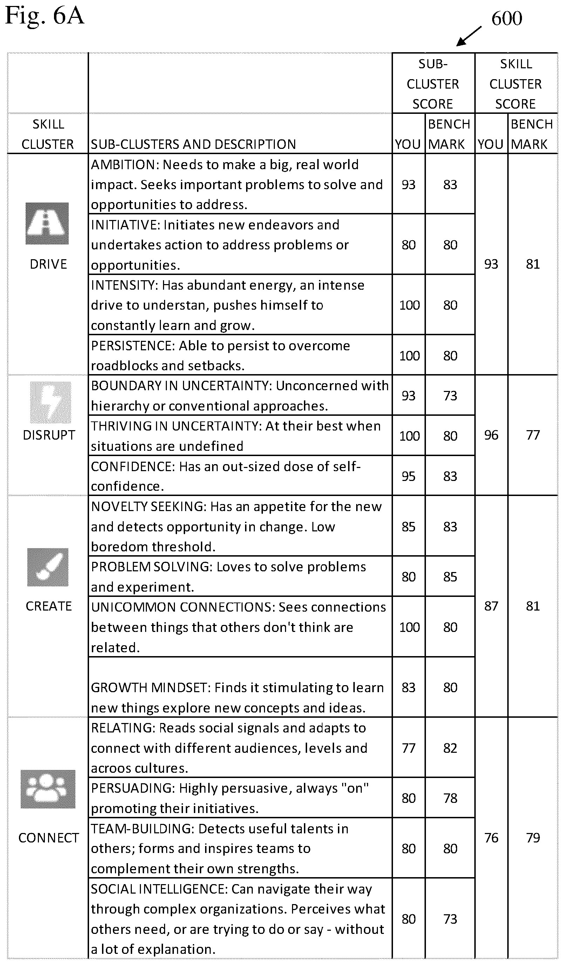

According to some embodiments, the method comprises a step of 230 generating a report for a manager of the team when the innovation profile for the plurality of individuals in the team meets or exceeds the innovator benchmark score or the general population score. An example report is illustrated in FIGS. 6A-7. In various other embodiments every user receives a report.

FIG. 3 is a flowchart of another feedback method of the present disclosure that includes a step 305 of identifying one or more of the plurality of individuals with a high innovator score. The Profiler system can then build a team around this innovator by performing a step 310 of receiving a project type, or adding or team-members with the required set of skill clusters. This step defines what type of team is built by the Profiler system based on the defined project or required set of skill clusters. For example, the Profiler system can receive a request to create a team that excels in transformational innovation. The Profiler system will identify individuals in the organization that meet these criteria. These individuals have various skill sets that complement the individual identified with the high innovator score in some embodiments. In other embodiments, the team can be created without an individual designated as an innovator within the team. Next, the method includes a step 315 of selecting individuals from the plurality of individuals who comprise high skill cluster values relative to the project type or the set of required skill clusters.

Once these optimal individuals are determined, the method includes a step of 320 placing the selected individuals and the one or more of the plurality of individuals into a team.

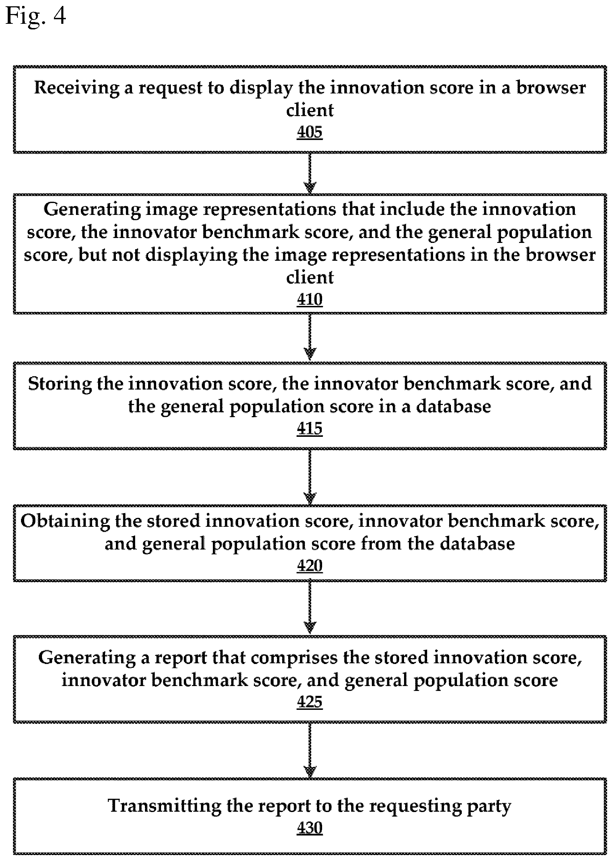

In some embodiments, the Profiler system is configured to execute a method of generating an innovation profile report for an individual. FIG. 4 is a flowchart of an example method of generating an innovation profile report by a step 405 of receiving a request to display the innovation profile in a browser client. For example, the individual can respond to the survey questions and request that the Profiler system provide them with a report that is indicative of their innovation profile. In other embodiments the report does not show scores, but provides individuals with their innovator type, and optionally their top three skills and emerging three skills.

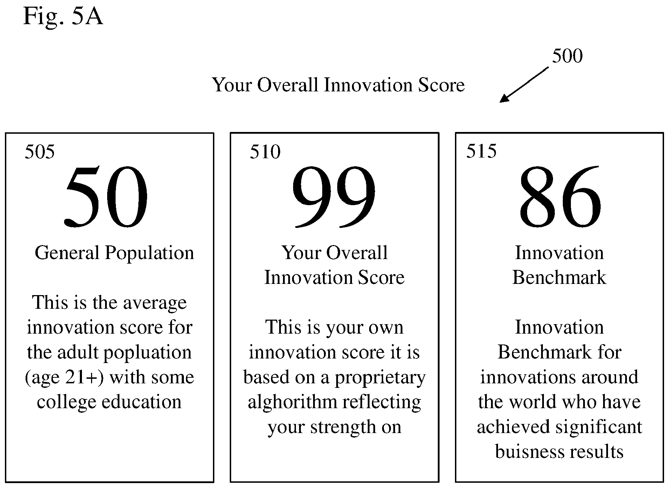

The method includes a step 410 of generating images that represent innovation score, the innovator benchmark score, and the general population score, but not displaying the image representations in the browser client. An example series of representations are illustrated in FIG. 5A as a user interface 500. The interface 500 comprises an individual's innovation score 505, a general population benchmark 510, and an innovator benchmark 515.

The representations are image files that are generated by the Profiler system and placed into the HTML page in such a way that the individual cannot see the image files (which in some embodiments include graphs) initially.

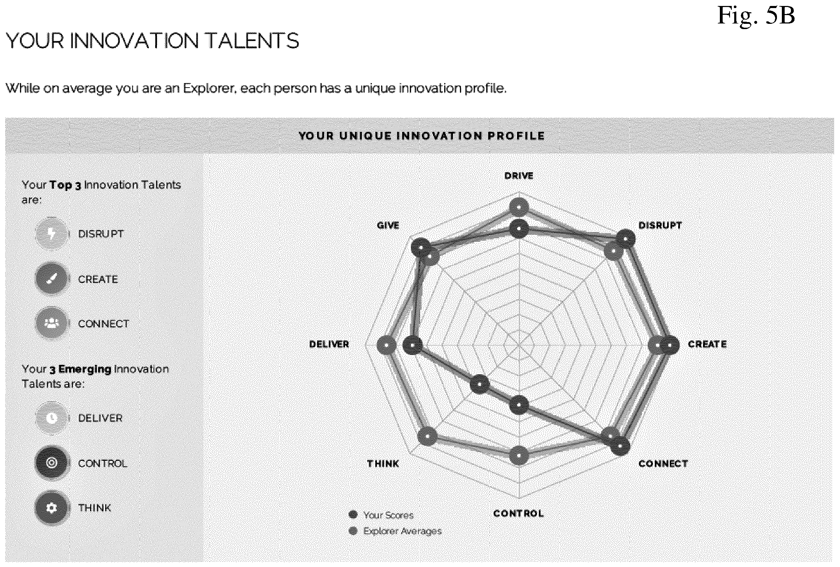

As shown in FIG. 5B, in other embodiments, rather than presenting users with their respective scores, instead the generated image comprises a graphical representation of the user's innovation profile, as well as the top three innovation talents and three emerging talents. The user's innovation horizon can also be provided.

In some embodiments, the method includes a step of 415 storing the innovation score, the innovator benchmark score, and the general population score in a database.

A report is then assembled by a step 420 of obtaining the stored innovation score, innovator benchmark score, and general population score. The report is generated in step 425. The report can then be transmitted to a requesting party in step 430. The requesting party can include a supervisor or manager, and in some embodiments the individual who completed the survey.

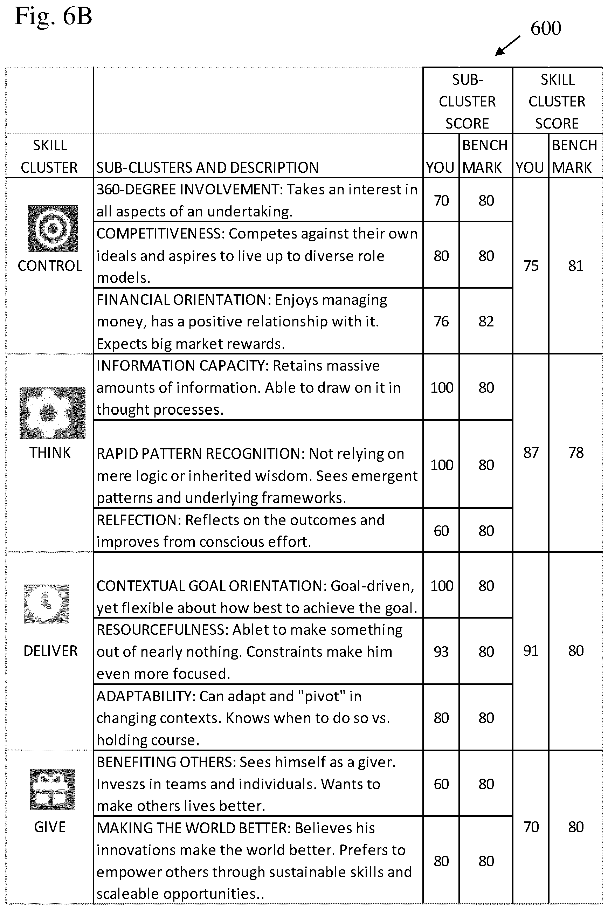

FIGS. 6A and 6B collectively illustrate a sample report 600 that includes an analysis of skill clusters, skill sub-clusters, sub-cluster scores, skill cluster scores, all arranged into a table format. The various scores are each compared to benchmark values that allow the reader to compare the individual to various benchmark values. Again, the benchmark values are related to entrepreneurs and/or intrapreneurs self-reported or determined skill scores calculated by the Profiler system.

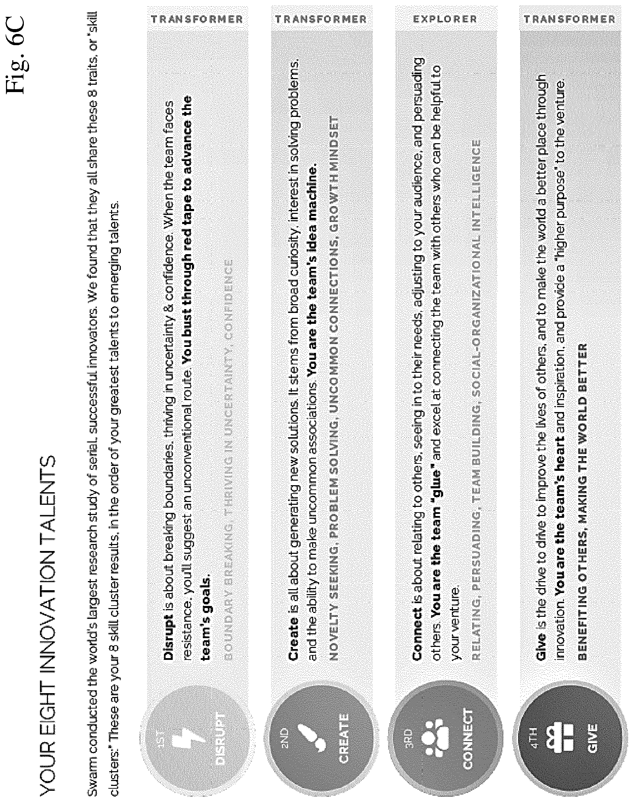

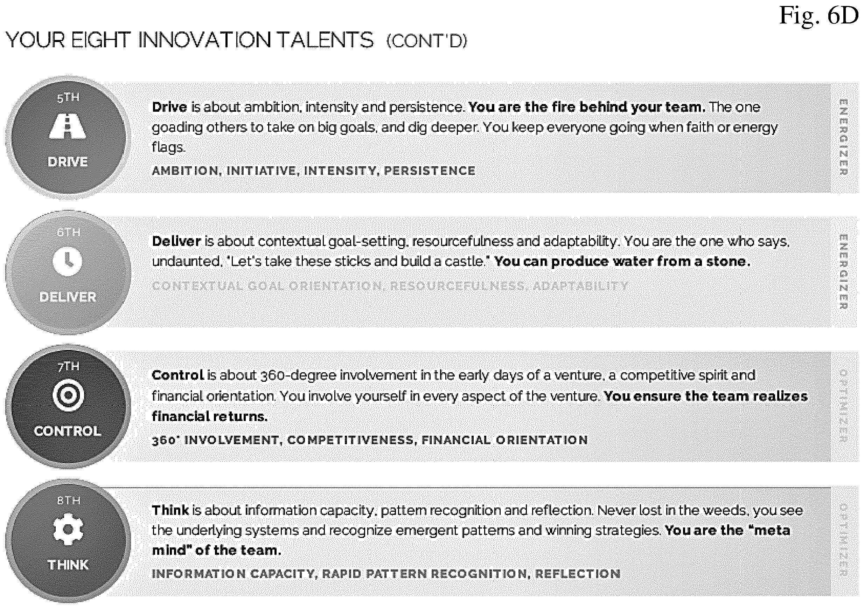

FIGs. 6C and 6D provide an alternative to the sample report 600. Here, the system displays summaries of the user's 8 innovation talents, arranged in order of greatest talents to emerging talents.

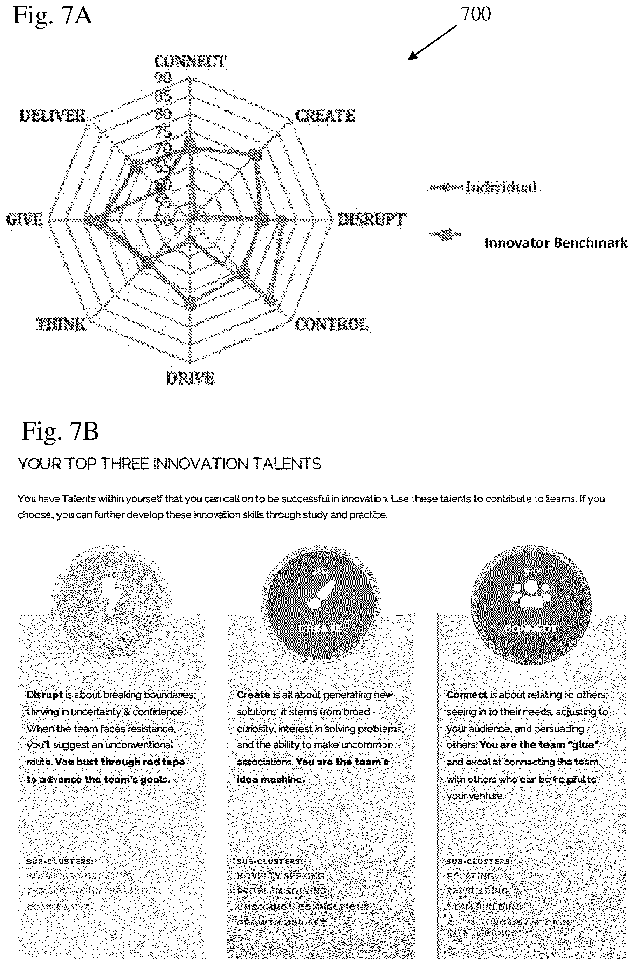

FIG. 7A illustrates an example graph 700 that illustrates an individual's scores compared against benchmark values. As mentioned above, an "Innovator Benchmark" for each skill cluster is calculated as the median score for the top 30% of entrepreneurs. In some embodiments, individual results are shown compared to the Innovator Benchmark. The graph is a spider web graph 700 that displays an individual's skill scores against the Innovator Benchmark for each of the same scores. The spider web graph 700 provides an easy visual indicator of low scoring skills relative to the Innovator Benchmark values.

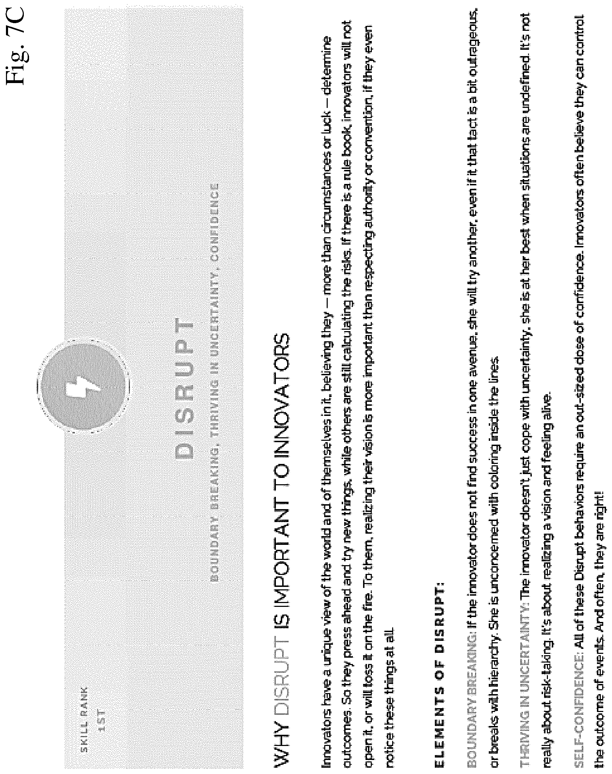

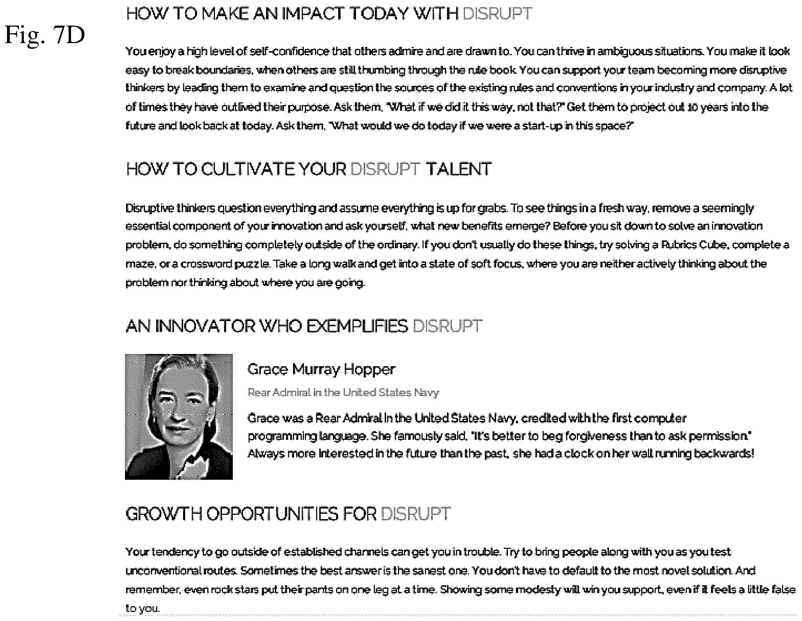

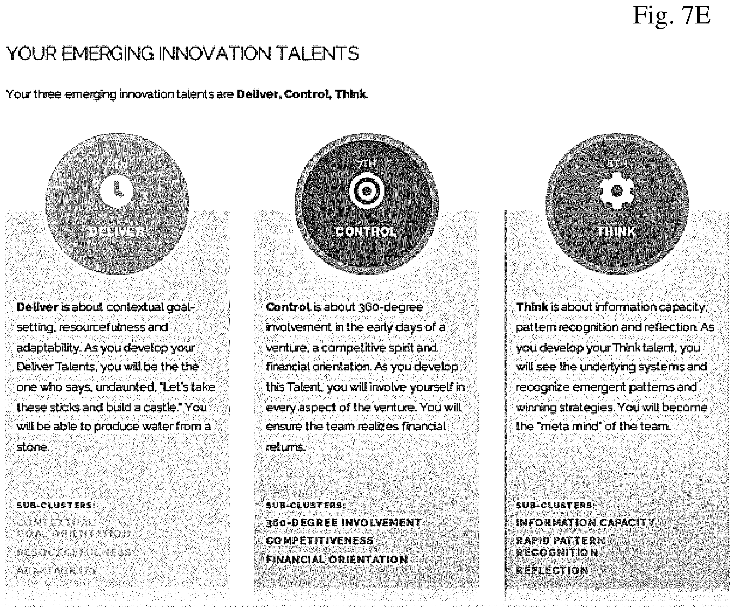

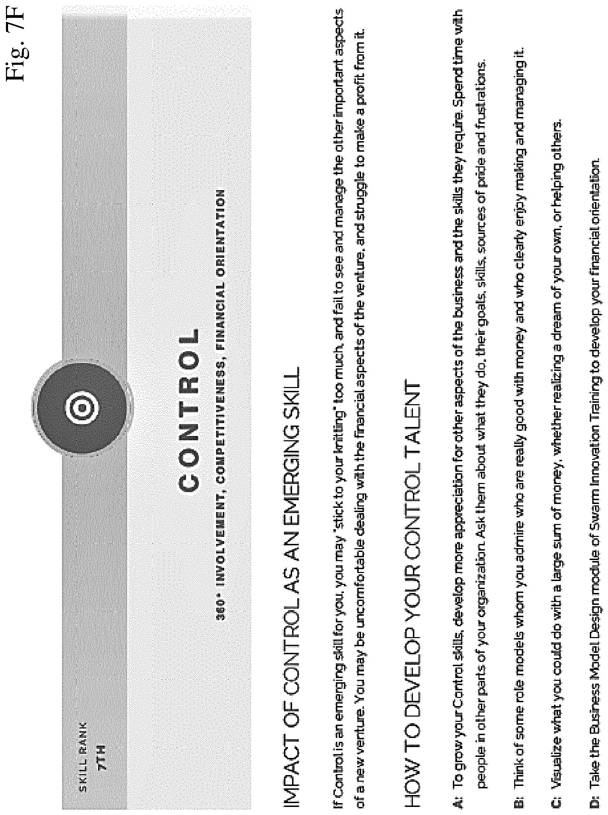

In other embodiments, instead of making comparisons against benchmarks, the system displays individual reporting by providing detail on each of the individual's top three and emerging three innovation talents. An example of such detail is given in FIGs. 7B-7F. FIG. 7B shows a display summarizing the top three innovation talents while FIGs. 7C and 7D provide greater explanations on one such talent. Similarly, FIG. 7E shows a display summarizing the top three emerging talents while FIG. 7F provides a greater explanation on one such talent.

According to some embodiments, the present disclosure is directed to systems and methods that implement and utilize behavioral profiling and actionable feedback loops to identify innovation characteristics in a crowd of individuals. These systems and methods have particular utility in project types where innovation is needed on the front end or inception of a commercial process.

In one embodiment, the system is configured to provide a crowd of individuals with a task or project that allows the system to elicit ideas. For example, the system can interrogate individuals to provide ideas for a new product or to improve the function or usefulness of an existing product.

Using the answers and responses, the system can utilize one or more algorithms to calculate a prolifacy score and a disruption score. The prolifacy score is indicative of the number of ideas generated on a per individual basis. This raw number can be placed into ranges of scores such as 0-5, 6-10, and so forth.

The disruption score is indicative of how disruptive the ideas are. In some embodiments, the ideas are evaluated by innovation experts, and in some embodiments a crowd review.

In a second aspect of the evaluation, individuals in the crowd are required to respond to a survey of questions. The survey includes a series of self-descriptive questions relating to dimensions commonly associated with innovators, such as curiosity, independent thinking, impatience with the status quo, accomplishment in the visual arts, scientific inquiry or inventions, number of social connections and social influence. The system can then cross-reference the answers to the most prolific and disruptive individuals to answers on the self-descriptive questions.

In some embodiments, the system is configured to retain self-descriptive questions with a high correlation among Prolific/Disruptor individuals, and eliminate questions with a low correlation. The system then selects individuals from the database to create a group, which is both more prolific and more disruptive than the general population. The system codes these individuals as "Ideators."

The system can assign one of four roles (or potentially none) to an individual based on their survey answers.

In some embodiments, the Profiler system of the present disclosure can identify clusters of innovation skills that are tied to specific skill types such as ideators, optimizers, visualizers, and influentials. An ideator is a prolific idea creator. When these individuals are paired with disruptive thinkers, a large number of relevant and divergent ideas can be produced. Optimizers are individuals who excel at critiquing and improving products and services. Visualizers are individuals who can give abstract ideas a concrete form and bring ideas to fruition. Influentials are individuals who are highly networked and consulted for valued opinions. These individuals are frequently early product adopters and drive acceptance of new products/technology.

According to some embodiments, the system can tailor or suggest a group of individuals for a project type based on their assigned roles. Stated otherwise, based on a set of innovation project objectives, the system can selectively adjust a group of individuals to consist or comprise different combinations/permutations of individuals with selected skill groups.

In another application, the system can be configured to determine compositions of individuals that can be combined into a team or crowd to serve a specific project type such as commercial innovation, incremental innovation, and breakthrough innovation. In some embodiments, commercial innovation can benefit from individuals who are influential and visualizers. Incremental innovation project types can benefit from individuals that are optimizers and breakthrough innovation project types can benefit from individuals who are ideators and visualizers.

In some embodiments, an optimal innovation team that comprises a selection of the plurality of individuals with highest innovation scores that cover eight skill clusters comprising drive, create, disrupt, control, connect, deliver, think, and give.

The Profiler system can also be configured to select an optimal innovation team based on a list of innovation skills required for the team. For example, if it is desired to create a team that is needed for a breakthrough innovation project, the Profiler system can locate individuals with scores that are indicative of being an ideator or visualizer.

In another embodiment, the optimal innovation team is selected based an innovation stage selected from front-end ideation, product market fit, and scaling. Thus, the optimal innovation team can be selected based on needed functional skills, project types, and project timing, as well as combinations thereof.

FIG. 8 is a screenshot of a matrix that illustrates selection by a Profiler system of an optimal innovation team. The team includes individuals with high overall innovation scores which are needed to form a new team. Thus, the project type is "new team." The Profiler system automatically selects individuals for the team. In one embodiment the team is comprised of eight individuals, each with high overall scores. Each member has multiple strengths. Each skill cluster has a minimum of three team members with high scores. Again, the Profiler system can identify these individuals from their behavior profiles stored in the database, where the behavior profiles have been constructed in accordance with the methodologies described above.

In some embodiments, the Profiler system automatically selects the individuals for the team and highlights the individuals selected within the UI, such as with boxes 802 and 804. For reference, the Profiler system can also highlight individual skill cluster and sub-cluster scores that were utilized and the basis for determining the permutation of individual selected for the team. For example, the system can highlight skill cluster value cells, such as cell 806, with a second color.

The reports can be generated each time an individual in an organization completes a survey. In other embodiments, a report is delivered to a manager or owner of the organization when an individual does not meet or exceed a benchmark innovation value. In one embodiment, the organization can use the survey and scoring methodologies in employment hiring or organizational development. For example, if the organization needs to hire for a critical innovation role, the Profiler system can survey and score employment candidates and compare the skill clusters, sub-clusters, and innovation scores to a job profile. In this instance, the job profile at least includes a behavior profile that defines a set of skill clusters/sub-clusters that are desired for the position. Thus, rather than evaluating candidates based on typical hiring criteria, the Profiler system can allow the organization to hire an individual based on their innovation profile. To be sure, the process can also integrate traditional candidate profiling techniques that would be known to one in the art.

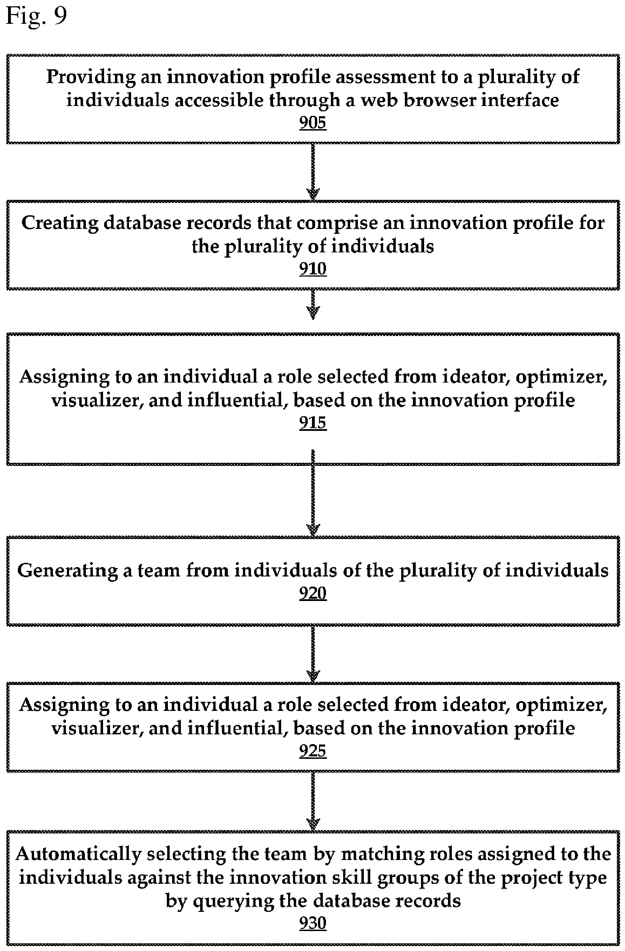

FIG. 9 is a flowchart of an example method that includes a crowd-specific embodiment of the present disclosure. The method includes a step 905 of providing an innovation profile assessment to a plurality of individuals accessible through a web browser interface. Next, the method includes a step 910 of creating database records that comprise an innovation profile for the plurality of individuals. To be sure, the innovation profile is indicative of a degree to which an individual is prolific and disruptive idea generator.

According to some embodiments, the method includes a step 915 of assigning to an individual a role selected from ideator, optimizer, visualizer, and influential, based on the innovation profile.

In some embodiments, the method includes a process 920 of generating a team from individuals of the plurality of individuals by a step 925 of receiving a project type selected from commercial innovation, incremental innovation, and breakthrough innovation. In one embodiment, the project type is associated with innovation skill groups. Some embodiments include a step 930 of automatically selecting the team by matching roles assigned to the individuals against the innovation skill groups of the project type by querying the database records.

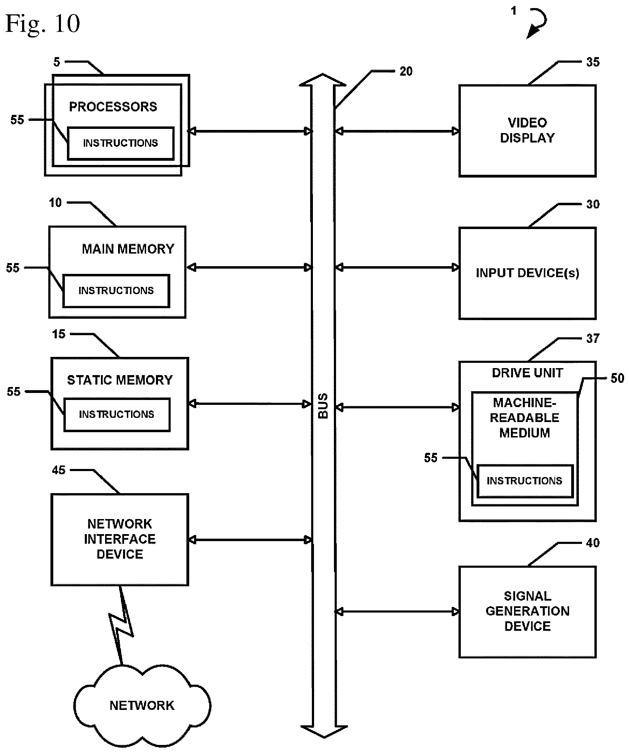

FIG. 10 is a diagrammatic representation of an example machine in the form of a computer system 1, within which a set of instructions for causing the machine to perform any one or more of the methodologies discussed herein may be executed. In various example embodiments, the machine operates as a standalone device or may be connected (e.g., networked) to other machines. In a networked deployment, the machine may operate in the capacity of a server or a client machine in a server-client network environment, or as a peer machine in a peer-to-peer (or distributed) network environment. The machine may be a robotic construction marking device, a base station, a personal computer (PC), a tablet PC, a set-top box (STB), a personal digital assistant (PDA), a cellular telephone, a portable music player (e.g., a portable hard drive audio device such as an Moving Picture Experts Group Audio Layer 3 (MP3) player), a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1 includes a processor or multiple processors 5 (e.g., a central processing unit (CPU), a graphics processing unit (GPU), or both), and a main memory 10 and static memory 15, which communicate with each other via a bus 20. The computer system 1 may further include a video display 35 (e.g., a liquid crystal display (LCD)). The computer system 1 may also include an alpha-numeric input device(s) 30 (e.g., a keyboard), a cursor control device (e.g., a mouse), a voice recognition or biometric verification unit (not shown), a drive unit 37 (also referred to as disk drive unit), a signal generation device 40 (e.g., a speaker), and a network interface device 45. The computer system 1 may further include a data encryption module (not shown) to encrypt data.

The drive unit 37 includes a computer or machine-readable medium 50 on which is stored one or more sets of instructions and data structures (e.g., instructions 55) embodying or utilizing any one or more of the methodologies or functions described herein. The instructions 55 may also reside, completely or at least partially, within the main memory 10 and/or within the processors 5 during execution thereof by the computer system 1. The main memory 10 and the processors 5 may also constitute machine-readable media.

The instructions 55 may further be transmitted or received over a network via the network interface device 45 utilizing any one of a number of well-known transfer protocols (e.g., Hyper Text Transfer Protocol (HTTP)). While the machine-readable medium 50 is shown in an example embodiment to be a single medium, the term "computer-readable medium" should be taken to include a single medium or multiple media (e.g., a centralized or distributed database and/or associated caches and servers) that store the one or more sets of instructions, as well as database records. The term "computer-readable medium" shall also be taken to include any medium that is capable of storing, encoding, or carrying a set of instructions for execution by the machine and that causes the machine to perform any one or more of the methodologies of the present application, or that is capable of storing, encoding, or carrying data structures utilized by or associated with such a set of instructions. The term "computer-readable medium" shall accordingly be taken to include, but not be limited to, solid-state memories, optical and magnetic media, and carrier wave signals. Such media may also include, without limitation, hard disks, floppy disks, flash memory cards, digital video disks, random access memory (RAM), read only memory (ROM), and the like. The example embodiments described herein may be implemented in an operating environment comprising software installed on a computer, in hardware, or in a combination of software and hardware.

Not all components of the computer system 1 are required and thus portions of the computer system 1 can be removed if not needed, such as Input/Output (I/O) devices (e.g., input device(s) 30). One skilled in the art will recognize that the Internet service may be configured to provide Internet access to one or more computing devices that are coupled to the Internet service, and that the computing devices may include one or more processors, buses, memory devices, display devices, input/output devices, and the like. Furthermore, those skilled in the art may appreciate that the Internet service may be coupled to one or more databases, repositories, servers, and the like, which may be utilized in order to implement any of the embodiments of the disclosure as described herein.

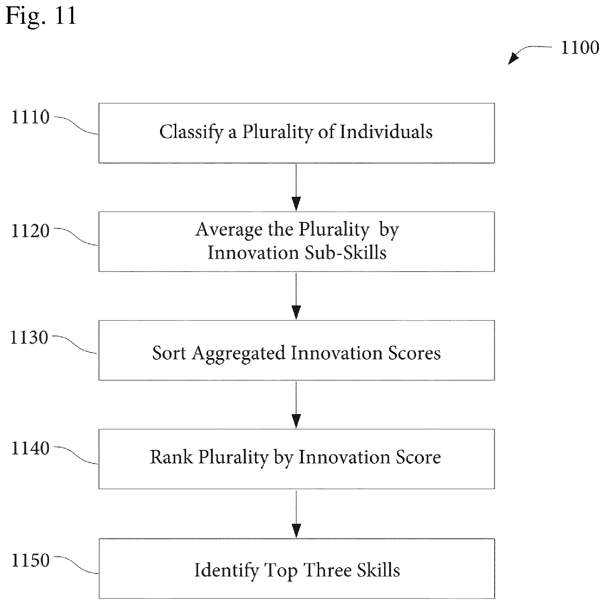

FIG. 11 is a flowchart representation of another exemplary method 1100 of the present disclosure. The method illustrated by FIG. 11 is a computer-generated method that employs a processor of a computer system, such as processor 5 of computer system 1, and further employs database records for a plurality of individuals. The results of any or all of the steps and substeps described below are optionally displayed to a user though graphical images such as those used to illustrate the steps.

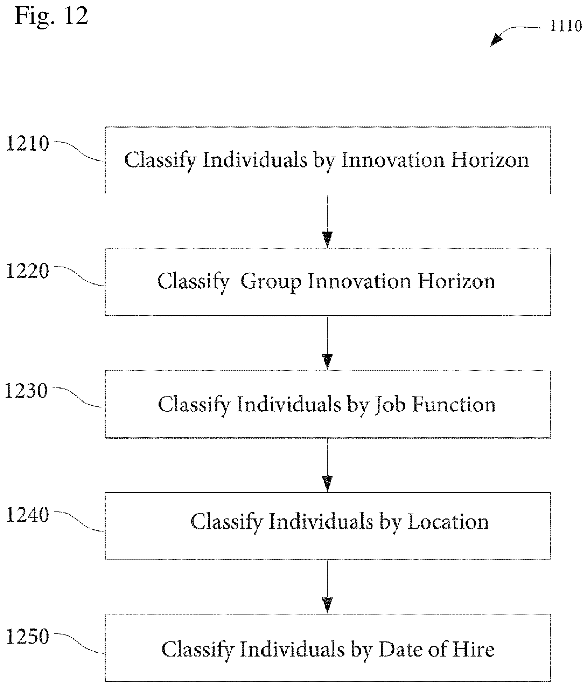

The method of FIG. 11 is directed to identifying individuals by their innovation scores and to identifying how innovation skills are distributed across an organization. The method 1100 begins with a step 1110 of classifying a plurality of individuals. The classification performed in step 1110 is further illustrated by the method of FIG. 12. The first classification step 1210 involves classifying a plurality of individuals by their innovation horizons based on their innovation scores, where the innovation horizons are indicative of each individual's ability to innovate in each of the innovation horizons. Determining innovation scores for each of the plurality of individuals from database records that comprise innovation profiles for the individuals is described above. In various embodiments there are four innovation horizons, though other embodiments can include more than four or less than four. In an exemplary embodiment, four innovation horizons comprise Continuous Improvement, Incremental Innovation, Adjacent Innovation, and Transformational Innovation. A person classified as having the Continuous Improvement innovation horizon is categorized by innovation type as an Optimizer; a person classified as having the Incremental Improvement innovation horizon is categorized as an Energizer; a person classified as having the Adjacent Innovation innovation horizon is categorized as an Explorer; and a person classified as having the Transformational Innovation innovation horizon is categorized as a Transformer. It should be noted that the order of steps in FIG. 12 is exemplary, not required.

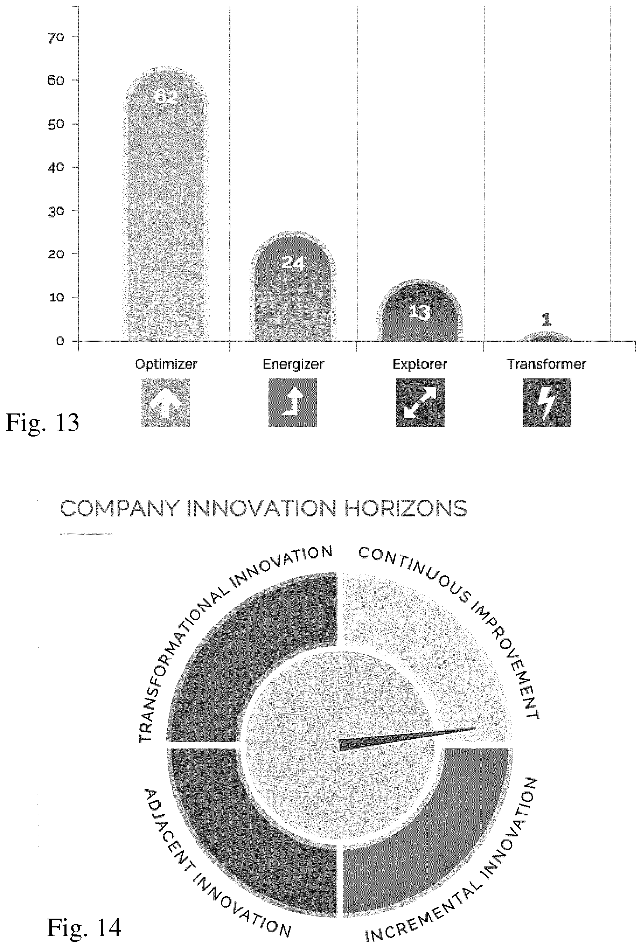

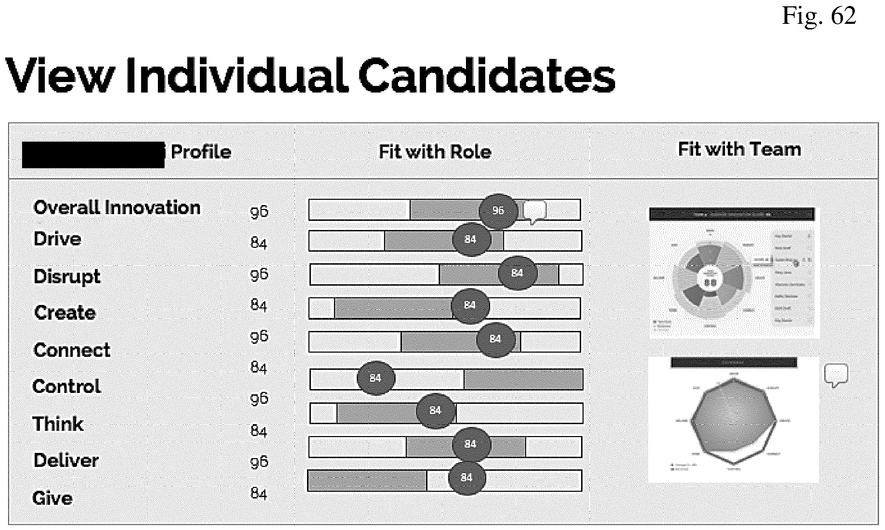

The result of the classification by innovation horizon, and the further steps and substeps described herein, can optionally be displayed, for example, on the video display 35 of the computer system 1 of FIG. 10. FIG. 13 illustrates such a display of a distribution (in %) of the plurality of individuals by the innovation type that corresponds to the innovation horizon. In the example of FIG. 13, 62% of the individuals were classified as Optimizers.

Returning to FIG. 12, in a second classification step 1220 the plurality of individuals are classified, as a group, into just one of the four innovation horizons, Continuous Improvement, Incremental Innovation, Adjacent Innovation or Transformational Innovation. FIG. 14 illustrates such a display of a classification of the group by innovation horizon. The arrow in FIG. 14 illustrates that the group as a whole falls into the Continuous Improvement innovation horizon, but is close to Incremental Innovation.

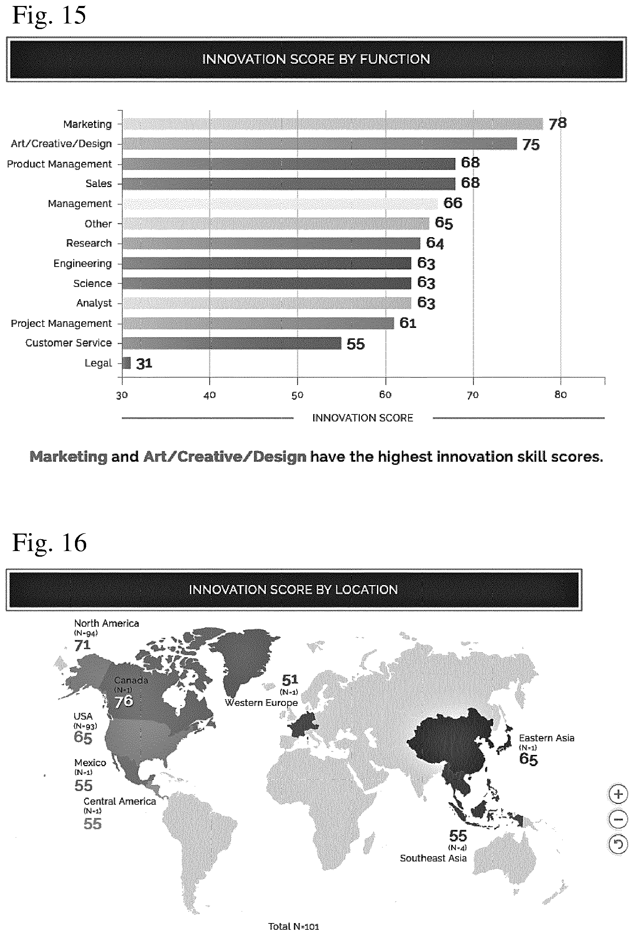

In a third classification step 1230 the plurality of individuals are classified by their job functions. The innovation scores for each job function are then averaged. As above, the average innovation scores can optionally be displayed by job function. FIG. 15 illustrates an exemplary display of the innovation scores for each job function.

In a fourth classification step 1240 the plurality of individuals are classified by their locations. Average innovation scores can then be determined, for example, by major world regions, by country, by region or sub-region, such as by US Census regions. As shown in FIG. 16, average innovation scores can optionally be displayed on a map.

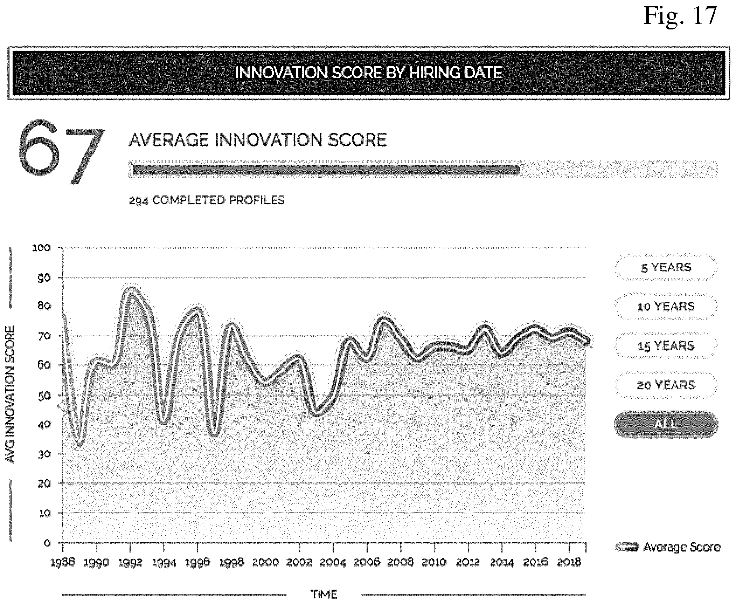

In a fifth classification step 1250 the plurality of individuals are classified by their hiring date. Average innovation scores are then be determined by year or by a span of time such as months or years, for example. FIG. 17 illustrates an exemplary plot of average aggregate innovation scores by year of hire for the plurality of individuals.

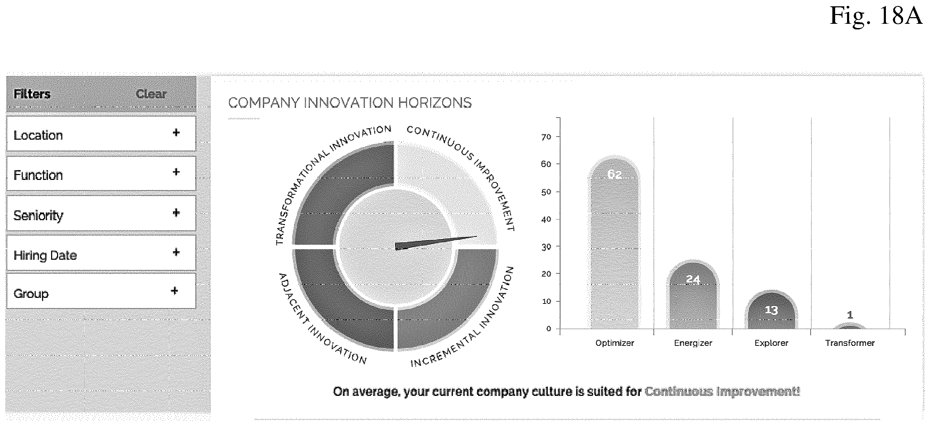

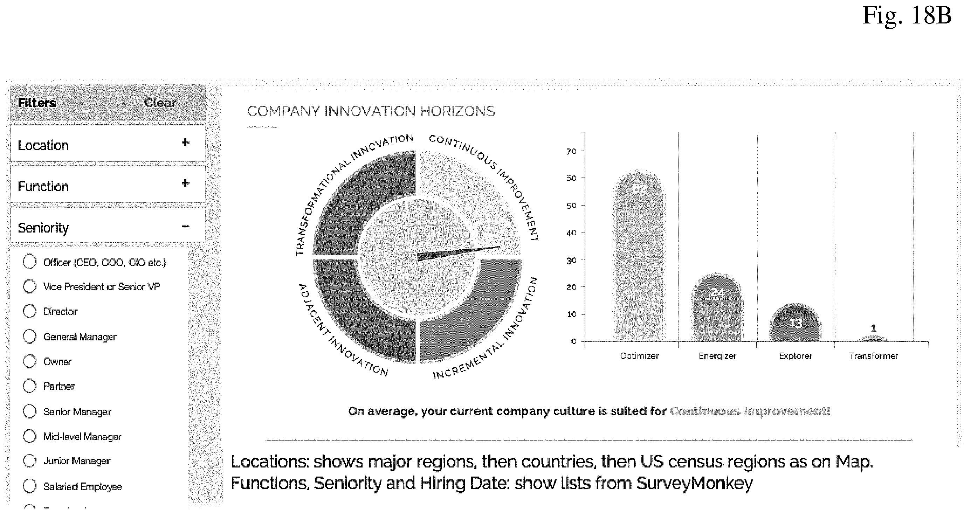

In a sixth classification step 1260 the plurality of individuals can be classified by applying various filters, or combinations of filters (e.g. filtered by innovation horizon AND hiring date). Other combinations of filters include but are not limited to location, function, innovation horizon, and seniority. The illustrations of FIGs. 18A and 18B show the plurality of individuals classified by different filters.

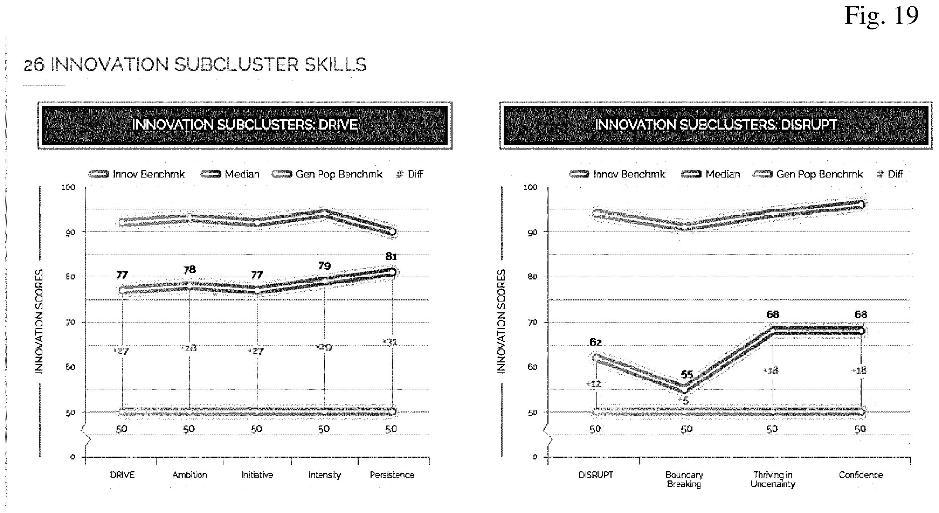

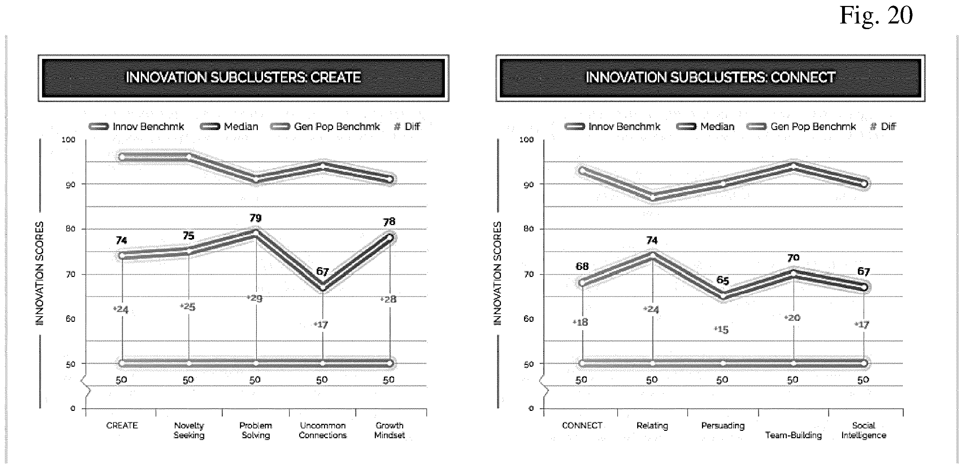

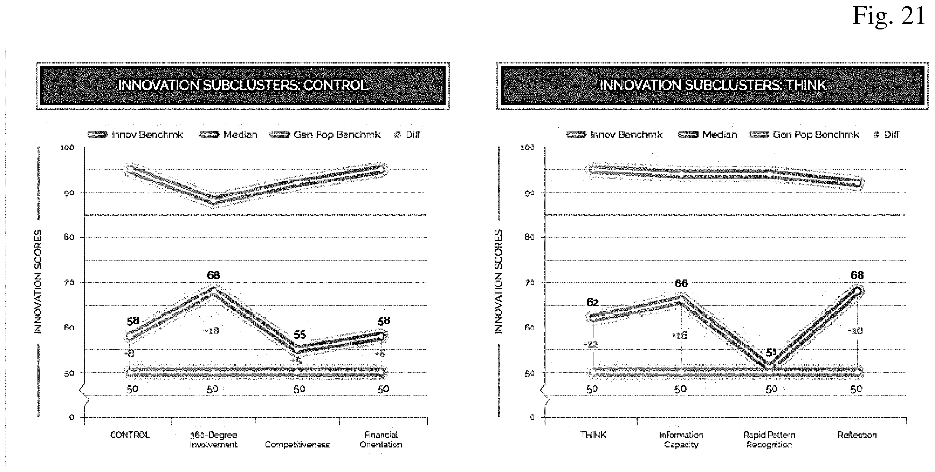

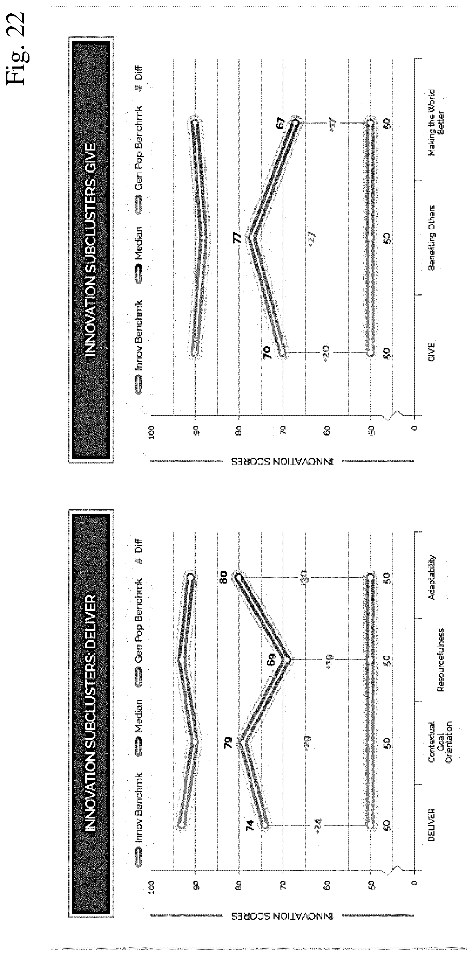

Returning to FIG. 11, in a step 1120 the innovation sub-skills for the plurality of individuals are averaged, where the sub-skills are the 26 components of the 8 innovation skills used in the system. FIGs. 19-22 illustrate plots of averaged innovation skills for the plurality of individuals for each of the 8 skill-clusters. In these examples, the scores are shown relative to the general population benchmark and relative to a target innovation benchmark.

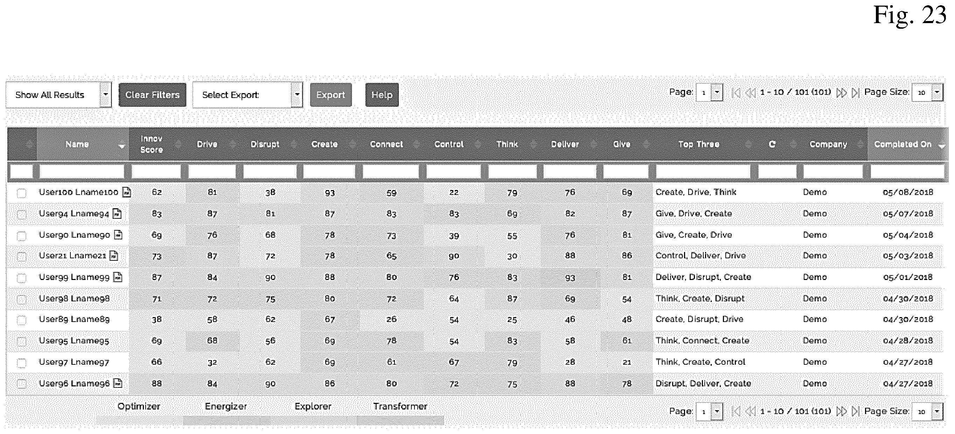

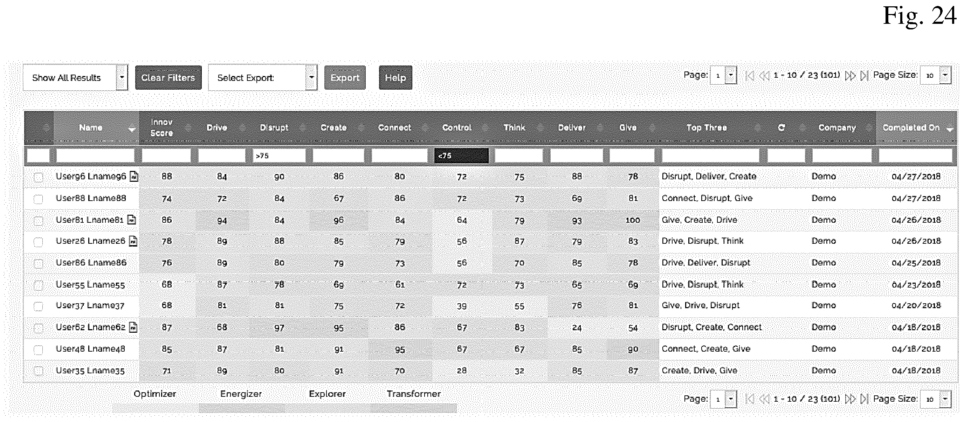

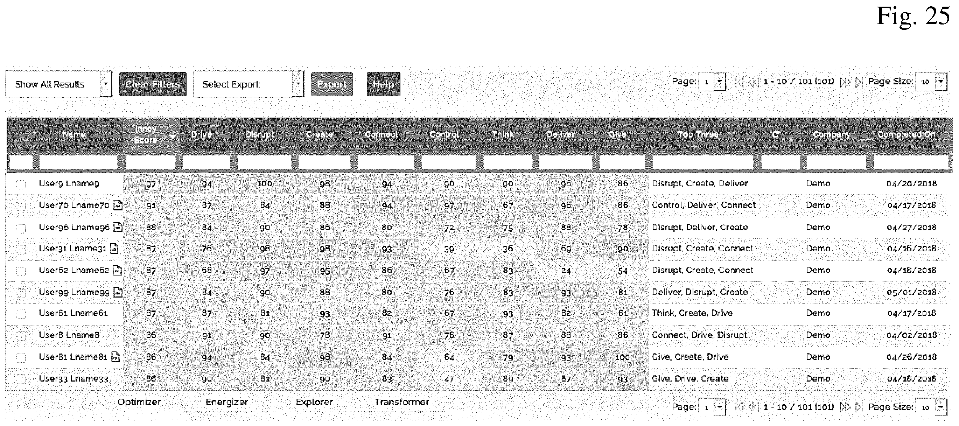

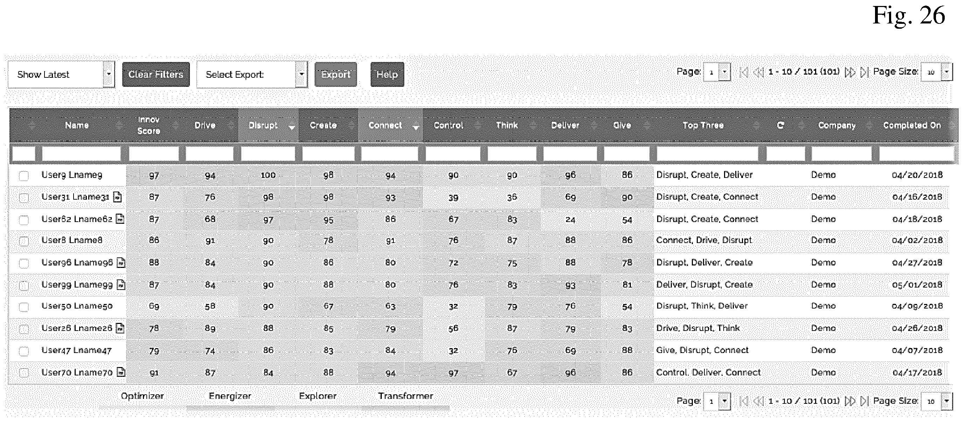

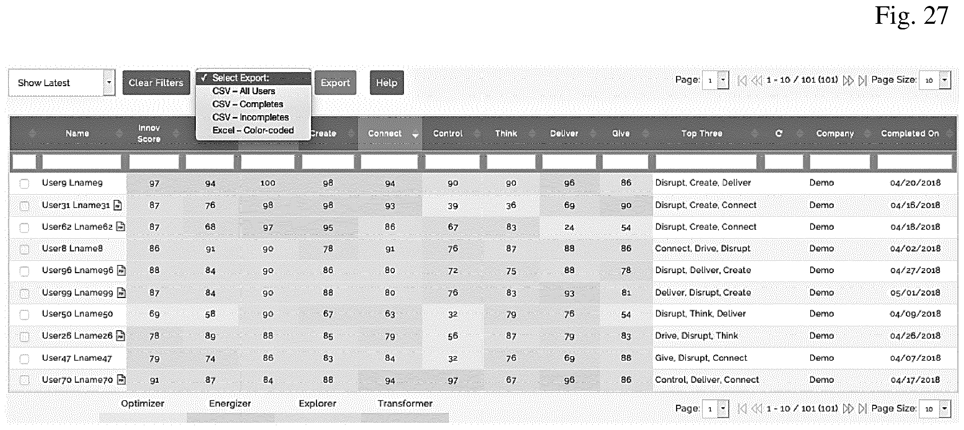

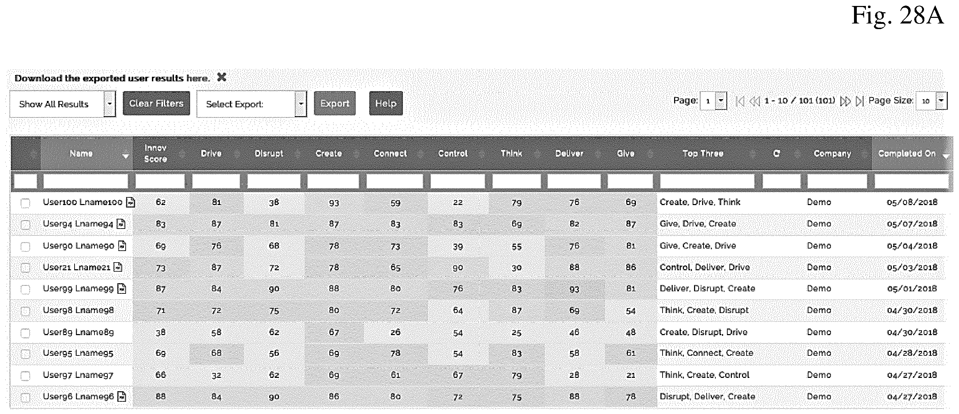

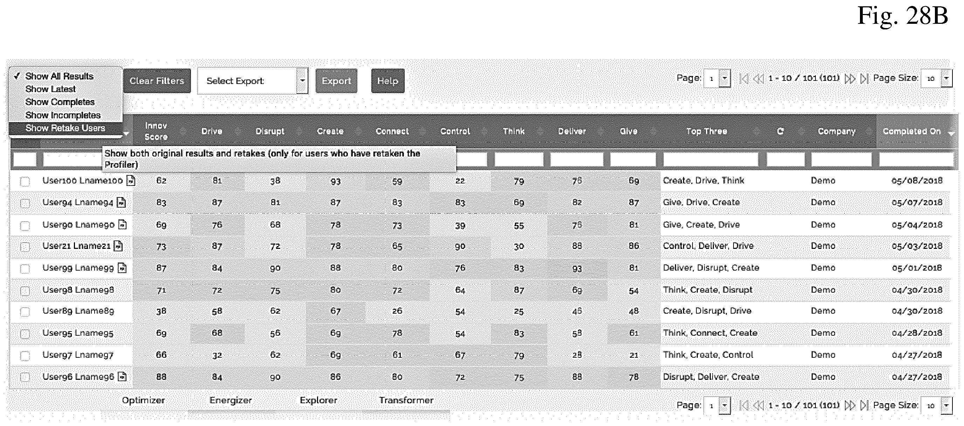

In a step 1130, illustrated by FIG. 23, the innovation scores, 8 skill-cluster scores and top 3 skills for the plurality of individuals are sorted and then exported. Innovation scores can be filtered (such as by greater than, less than, or equal to given values, or by a range of scores, or by combinations of scores. FIG. 24-26 illustrate different ways to sort the information in FIG. 23. In FIG. 24 the innovation scores are filtered by greater than (>) 75 Disrupt and less than (<) 75 Control scores. In FIG. 25 the innovation scores are sorted by descending order by innovation score. Similarly, FIG. 26 shows innovation scores in descending order, and by a combination of Disrupt and Connect scores. FIG. 27 illustrates the step of selecting a file format to export the innovation scores for the plurality of individuals, such as .xls and .csv. FIG. 28A illustrates the step of downloading the innovation scores for the plurality of individuals to the selected file format. FIG. 28B shows how the user can filter the table of FIG. 28A to see pre- and post-training scores for individuals who completed Training and retook the Profiler.

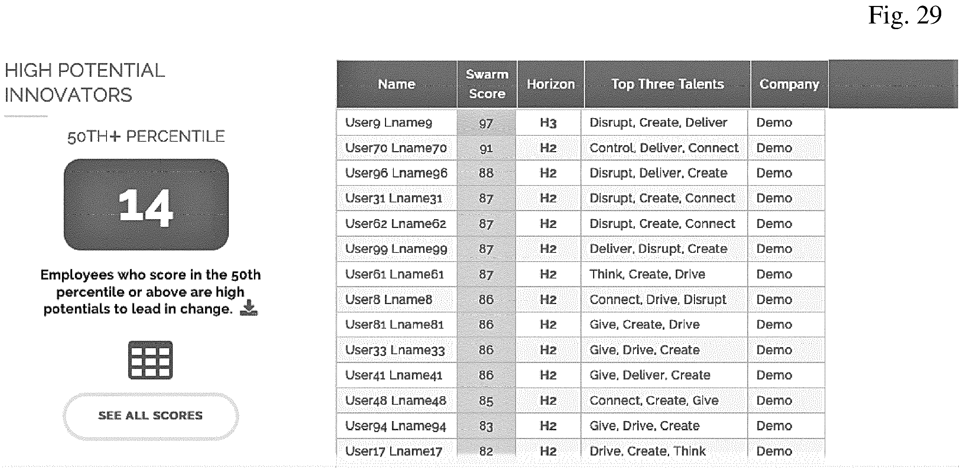

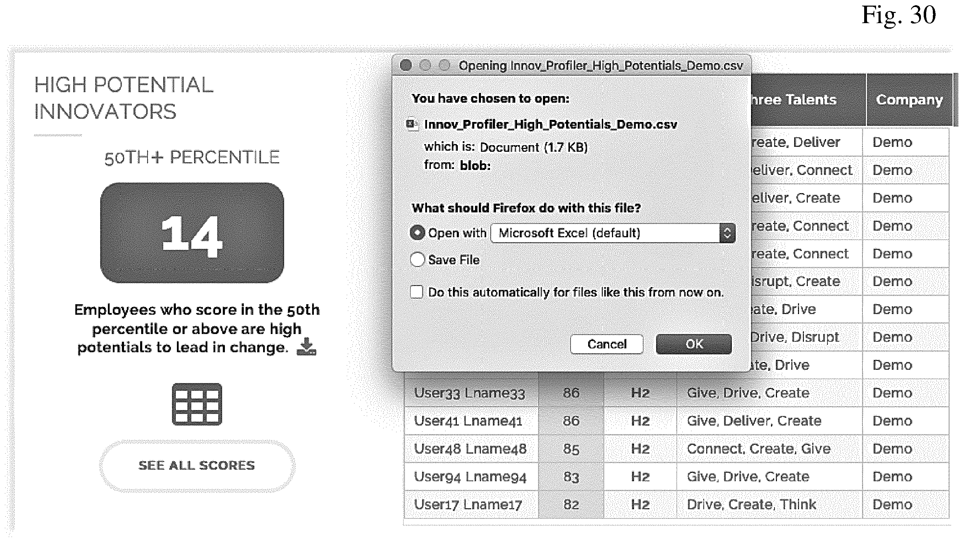

In a step 1140 of method 1100 the plurality of individuals are ranked, for example, by innovation score for innovation scores at or above the 50th percentile, to produce a list of individuals with their innovation scores, innovation horizons, and top 3 skills. In the example of FIG. 29, five individuals met the criterion of being at or above the 50th percentile for innovation score (shown as Swarm score) and are listed along with their innovation scores, innovation horizons, top 3 skills, and company affiliation. FIG. 30 illustrates the list from FIG. 29 being downloaded to a selected file format.

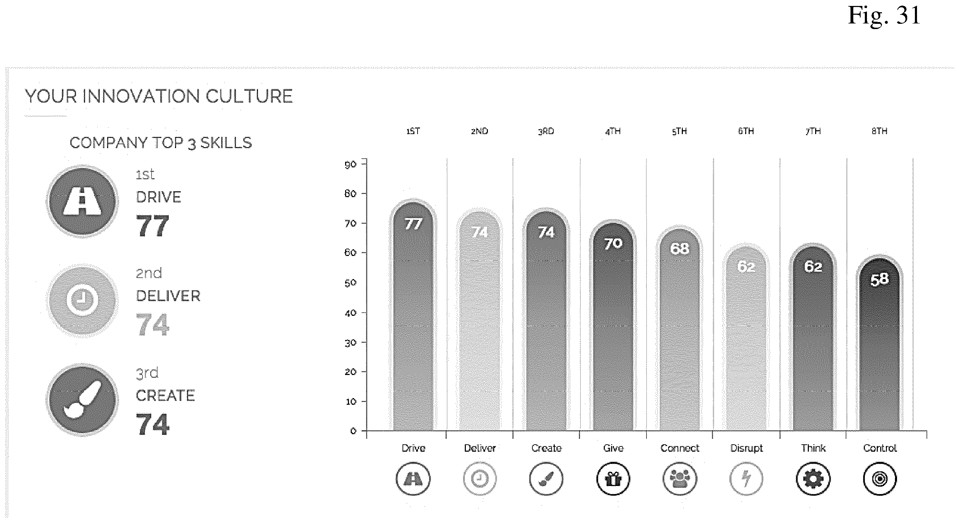

In a step 1150 of method 1100 the average innovation skill scores are ranked for the 8 skills, Drive, Disrupt, Create, Connect, Control, Think, Deliver, and Give. FIG. 31 illustrates average innovation skill scores for a plurality of individuals for the 8 skills, further illustrating the top three identified skills for the plurality in the aggregate, in this example for a company.

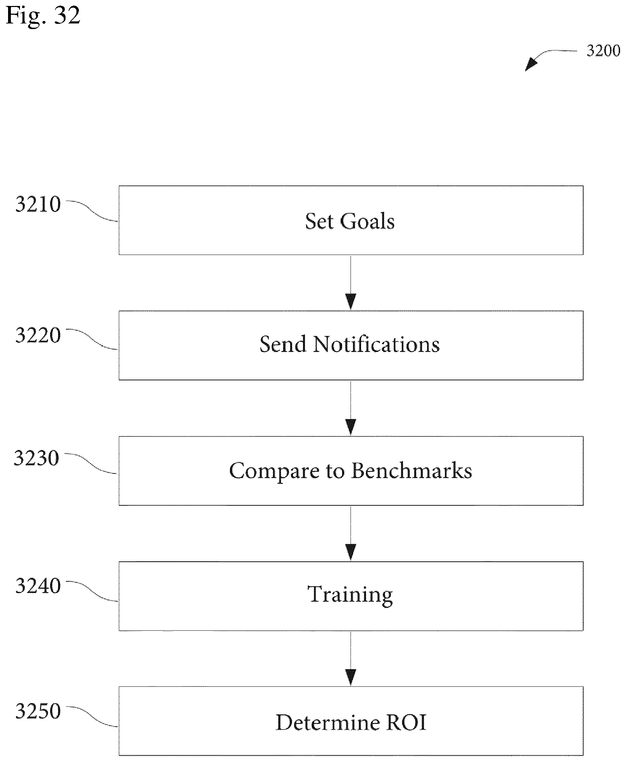

FIG. 32 is a flowchart representation of another method 3200 of the present disclosure directed to improving the innovation abilities of a plurality of individuals. Method 3200 can be, in some embodiments, an extension of the method 1100 of FIG. 11. Thus, some embodiments of the present disclosure include steps of both methods.

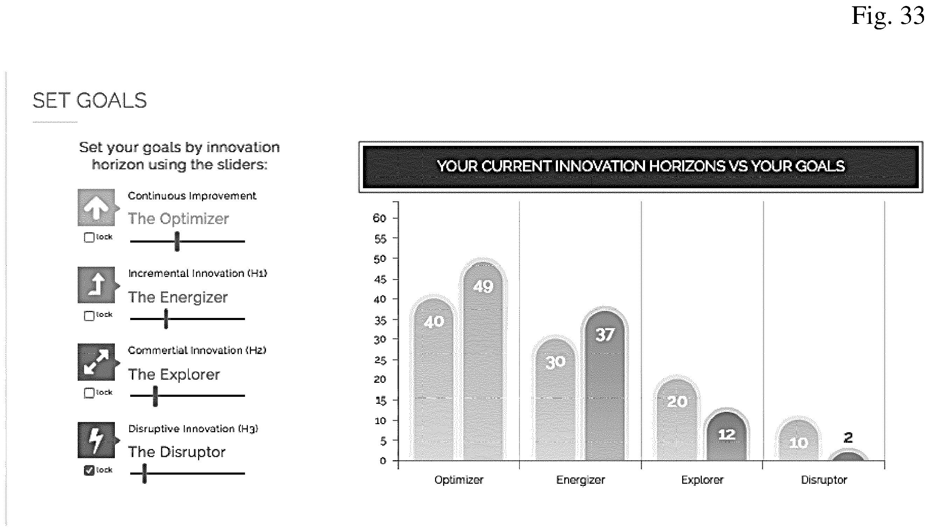

Method 3200 includes a step 3210 of setting goals for a desired allocation of innovation scores by a metric such as innovation horizon, the 8 innovation skills, hiring date, function, location, etc. FIG. 33 illustrates how a user can set goals for the distribution of innovation talent by innovation horizon in an organizational unit vs the current distribution. FIG. 33 further illustrates an exemplary graphical user interface for allowing the user to vary goals. In this example, the interface provides a slider for each of the innovation horizons. As a user moves a slider, the user can view the goal changing relative to the current value for that innovation horizon.

In a step 3220 a notification is generated then sent to one or more of the plurality of individuals in response to progress toward a goal, or a threshold being met for a metric, representing progress towards a goal.

In a step 3230 comparative data for the plurality of individuals relative to a variety of different benchmarks is generated, e.g. by sector, or by the most innovative companies.

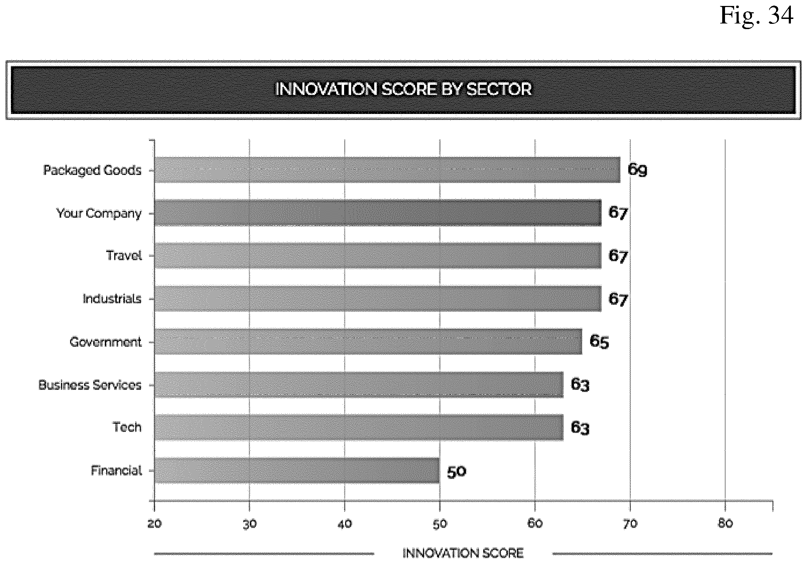

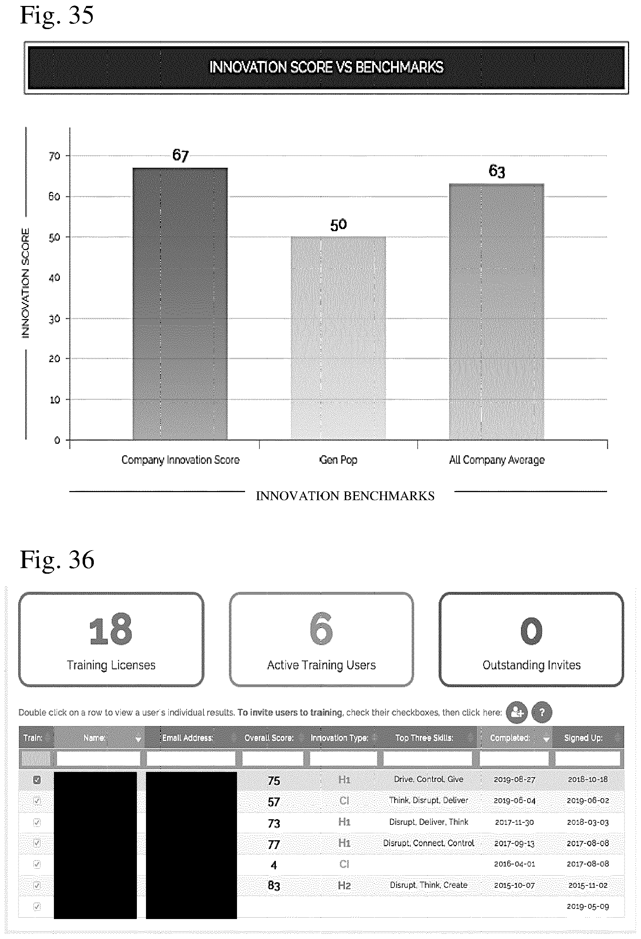

FIG. 34 illustrates an exemplary graphical representation of a company's innovation score relative to several diverse industry sectors. FIG. 35 illustrates another exemplary graphical representation of a company's innovation score relative to different populations, here the general population and the population of all companies.

In a step 3240, individuals who have been profiled on their innovation skills are invited to training, for example, through an online course to improve their innovation skills. FIG. 36 illustrates a graphical interface for managing access to an online training course, showing available training licenses available for the training course, the number of users that are actively training using the course, and the number of outstanding invites to other individuals of the plurality. FIG. 36 also shows that a user can view attributes and information for individuals of the plurality in a tabular format, including attributes such as their innovation scores and top three skills, so that the user can evaluate individuals to determine which ones to invite to the training and view the status of individuals in the training, e.g. invited, accepted, or completed. Individuals can be invited, for instance, with a check box selection, as shown.

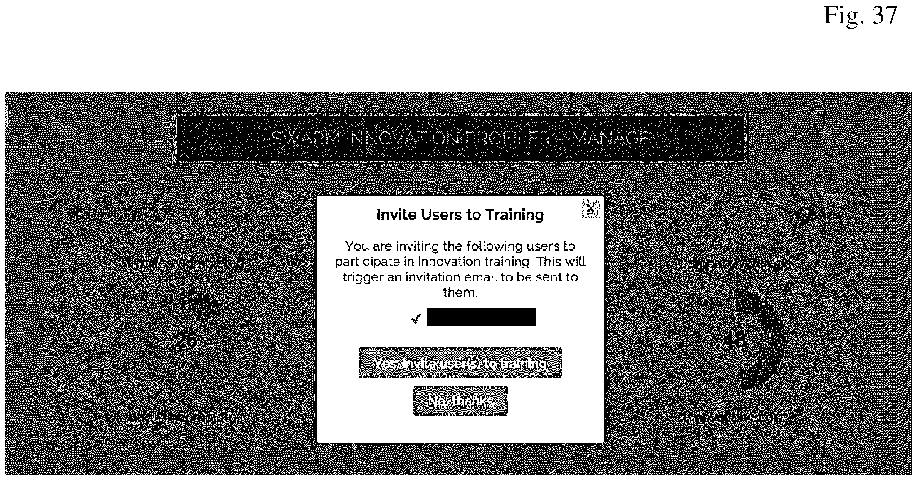

FIG. 37 shows an exemplary confirmation screen.

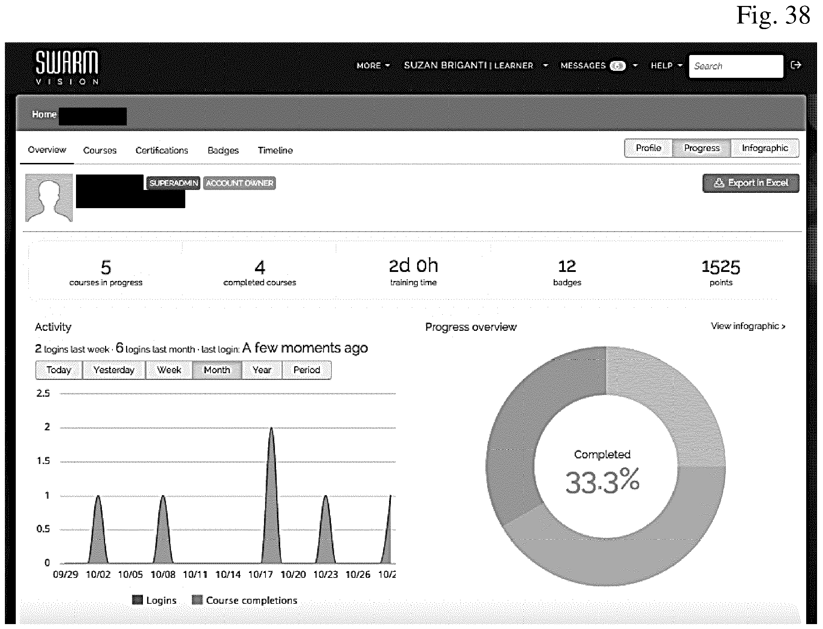

As the innovation skills of the individuals are developed through the innovation training, their progress can be calculated and displayed as shown in FIG. 38 which shows a 3rd party LMS system. In FIG. 38 the progress of individuals is measured through their advancement in metrics including the percentage of the course that is complete, test scores, engagement scores etc.

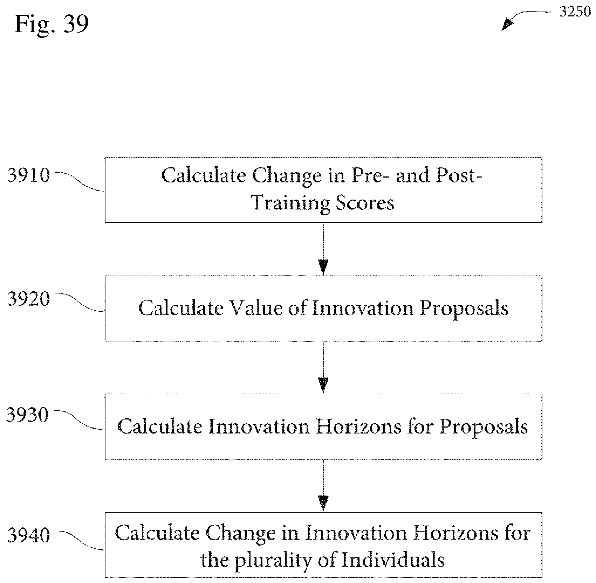

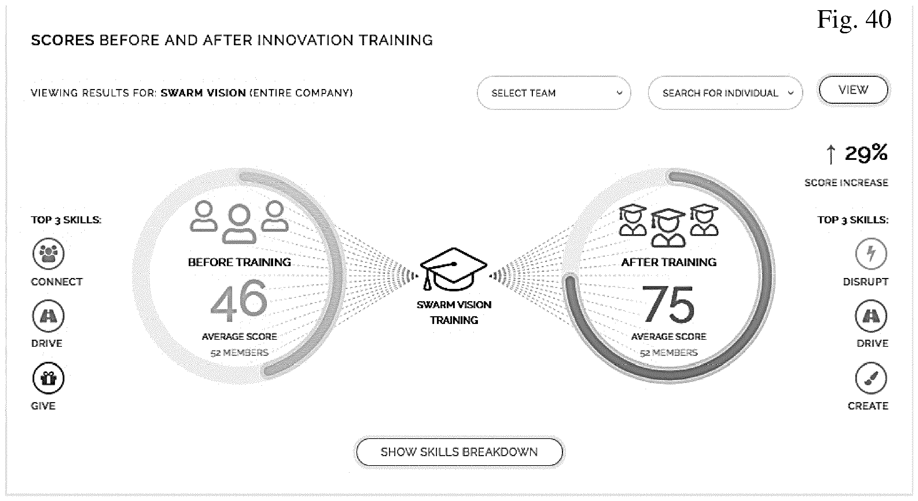

In a step 3250 a return on investment (ROI) is calculated for the innovation training, as illustrated by the method of FIG. 39. In a step 3910 the change in innovation scores for a plurality of individuals are calculated for both pre- and post-training. This can include, in some embodiments, the percentage change in average innovation scores, and the change in the top 3 skills. Step 3910 is illustrated by FIG. 40.

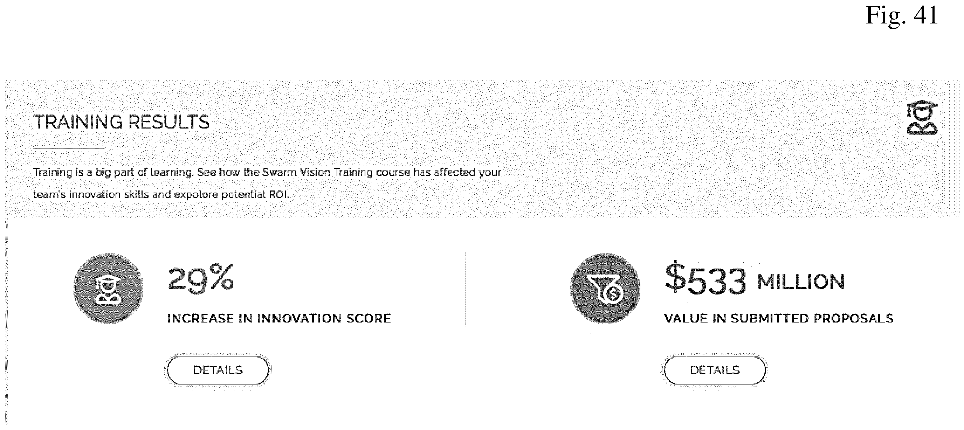

In a step 3920, illustrated by FIG. 41, the monetary value of the innovation proposals that a plurality of individuals has submitted through the innovation training is calculated. In this example, an increase in the innovation score of 29% is based on the individuals retaking the Profiler after completing the training. The value of the proposals, and their innovation horizon, is determined by data collected in the proposals themselves, in this case the submitted proposals are valued at $533 million.

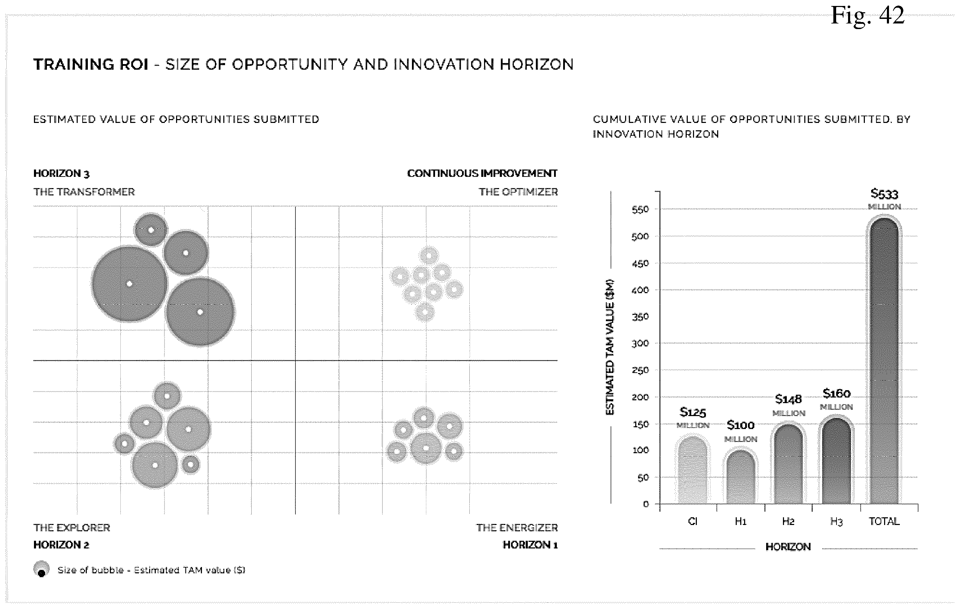

In a step 3930, illustrated by FIG. 42, the innovation horizons of the innovation proposals that the plurality of individuals has submitted through the innovation training are calculated. As shown, the proposals are evaluated for each innovation horizon and the values can be graphically displayed by the innovation horizon as well as summed over all of the innovation horizons. In some embodiments, the innovation proposals submitted by the plurality of individuals produced through the innovation training can be downloaded by a user.

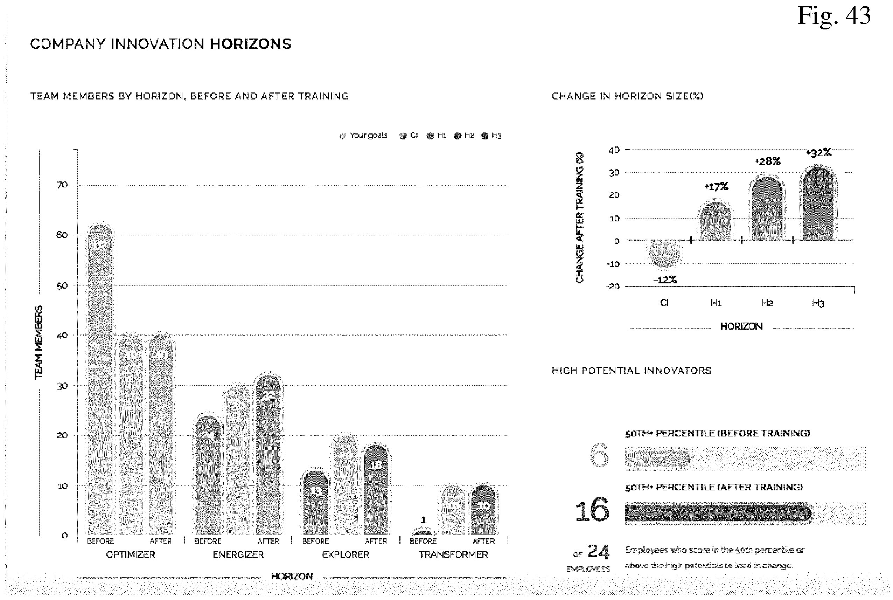

In a step 3940, illustrated by FIG. 43, the change in innovation horizons of the plurality of individuals pre- and post-training is calculated. That is, the percentage of Optimizers pre- and post-training, the percentage of Energizers pre- and post-training, the percentage of Explorers pre- and post-training and the percentage of Transformers pre- and post-training, are compared to the organization's previously established goals.

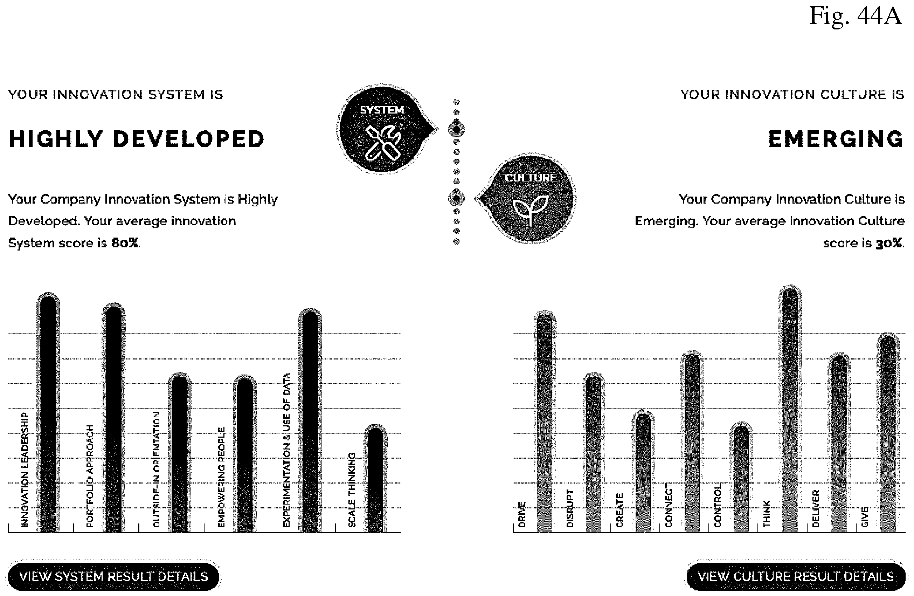

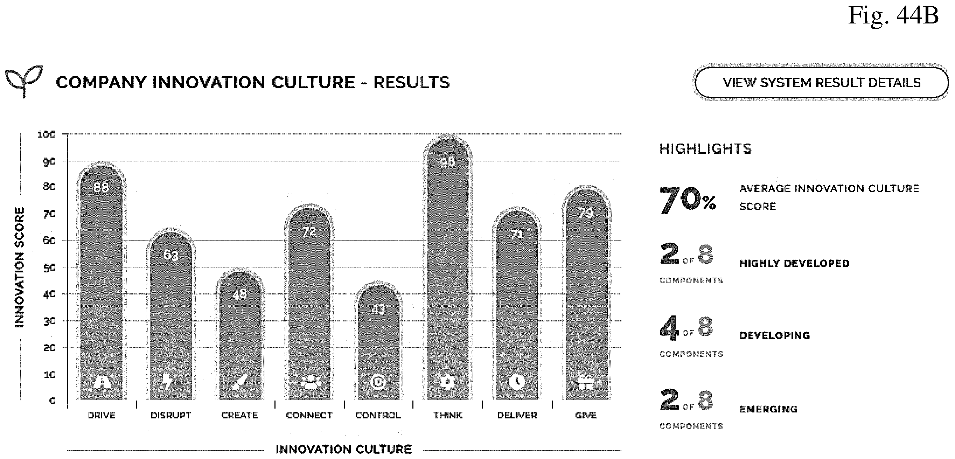

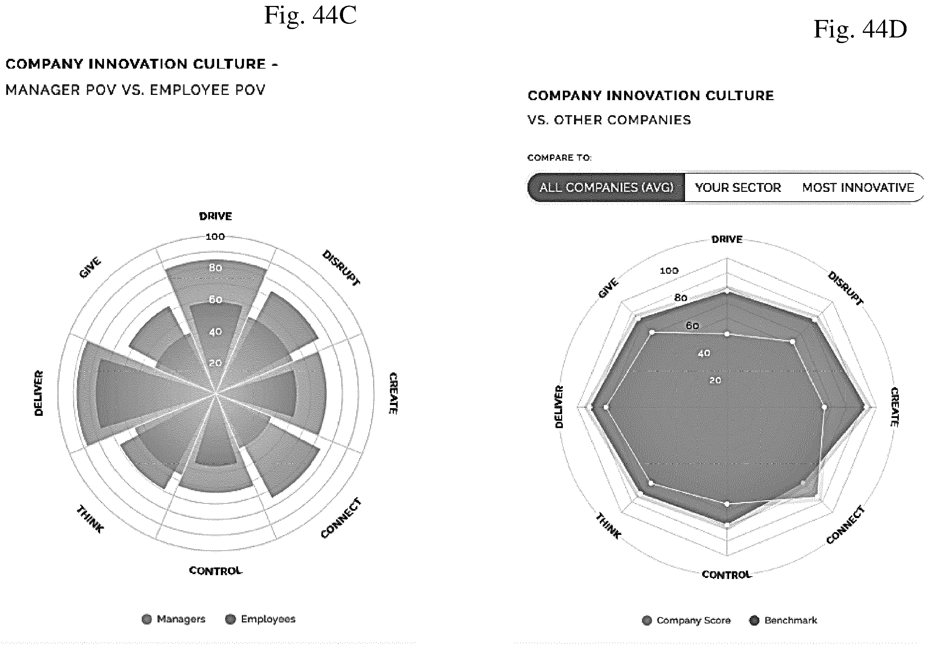

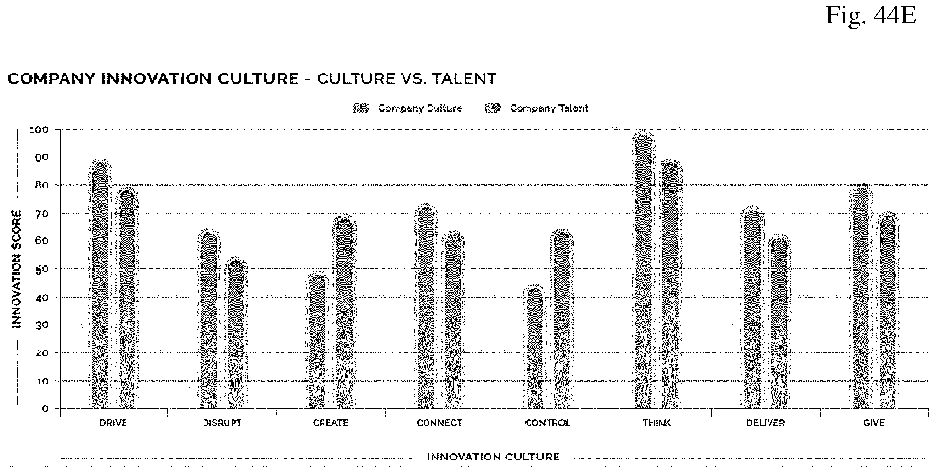

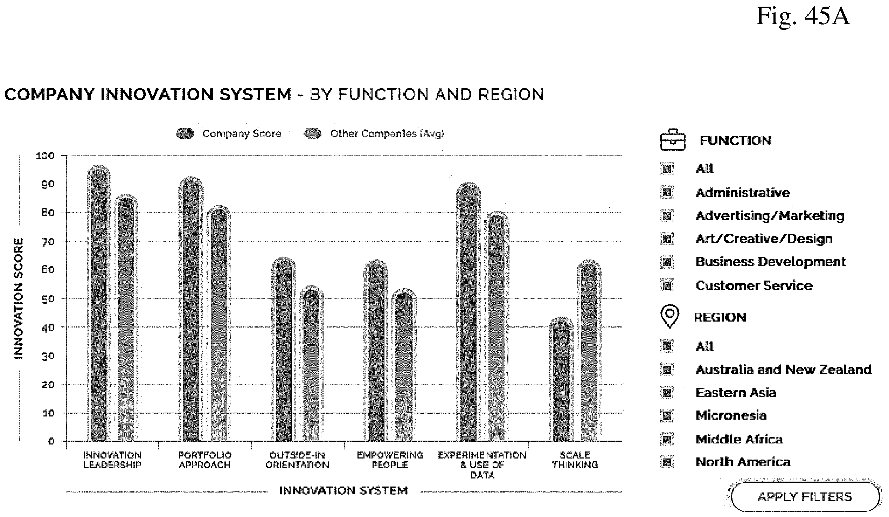

FIGs. 44A-44E and 45A-45D serve to illustrate the Culture product, FIGs. 44A-44E are directed to the company innovation culture while FIGs. 45A-45D are directed to the company's innovation system. FIG. 44A illustrates a comparison of a company's innovation system relative to the company's innovation culture. In various embodiments both the innovation system and innovation culture are scored on a percentage scale. FIG. 44B shows highlights for the company's innovation culture. FIG. 44C illustrates a comparison between the manager point of view (POV) as compared to that of the employees for the company innovation culture, also for the company's innovation culture. FIG. 44D illustrates a comparison between the company and other sample companies, either against all of the other companies, or against just those in the same sector, or against just the most innovative companies. FIG. 44E illustrates company culture as compared to company talent, scored for the 8 skills.

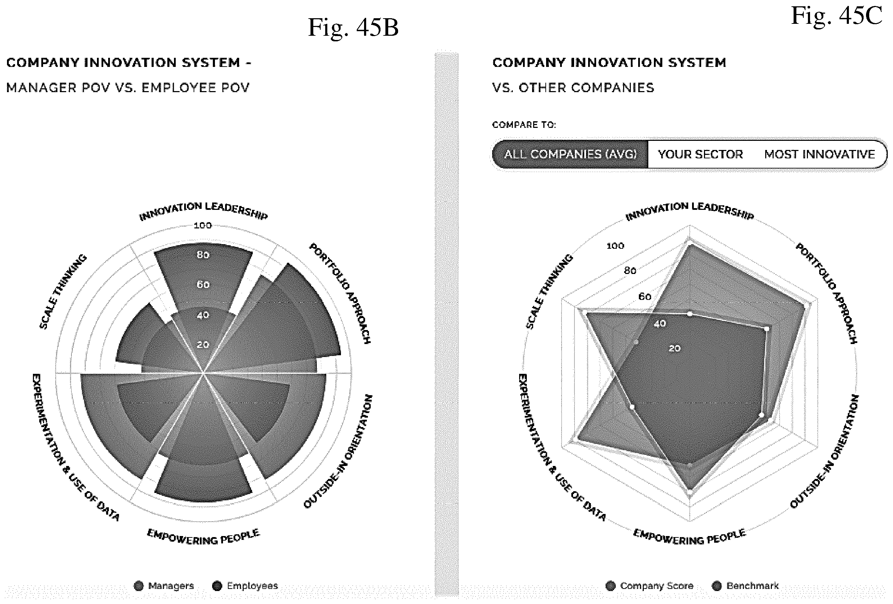

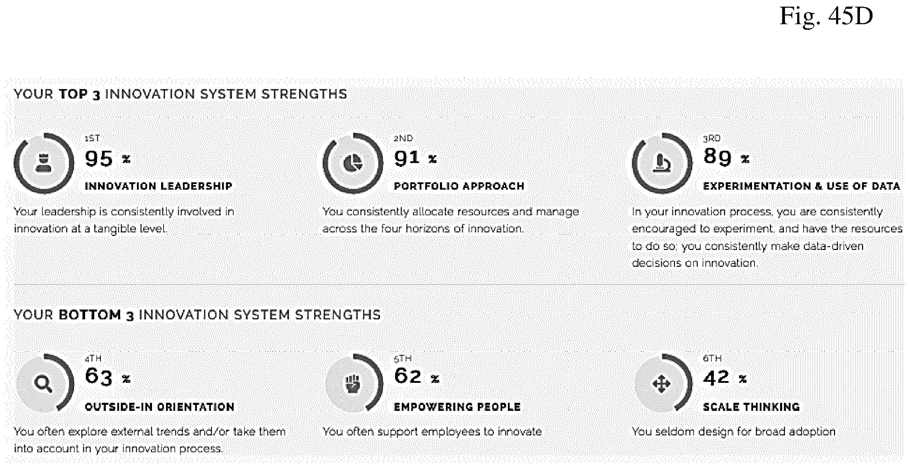

FIG. 45A illustrates the company innovation system by function and region. FIG. 45B illustrates a comparison between the manager point of view (POV) as compared to that of the employees for the company's innovation system. FIG. 45C illustrates a comparison between the company and other sample companies, either against all of the other companies, or against just those in the same sector, or against just the most innovative companies, also for the company's innovation system. FIG. 45D shows the top 3 and bottom 3 innovation system strengths.

With respect to the innovation system, in exemplary embodiments there are three ways in which to strengthen the innovation system, outside-in orientation to innovation, empowering people to innovate, and scale thinking to innovate. With respect to outside-in orientation to innovation, a company needs to become more outward-facing, exploring and acting on emerging trends, competitive threats and new technologies. To do this, a company may subscribe to trend services, and earmark funds for POCs (proofs of concept) with start-ups.

Regarding empowering people to innovate, a company needs to develop its culture of innovation, provide time and resources to employees to innovate, and match employee innovation skills to assignments. The methodologies discussed herein can also be employed to diagnose where company culture is not supportive of the 8 innovation skills. These methodologies can also be used to diagnose the biggest gaps in culture between managers and employees.

Regarding scaling thinking to innovate, a company needs to design innovations for adoption and scale, the company needs to get early buy-in from partners, and to plan for multiple launch scenarios, identify the whole product that users need, and to model various go-to-market approaches.

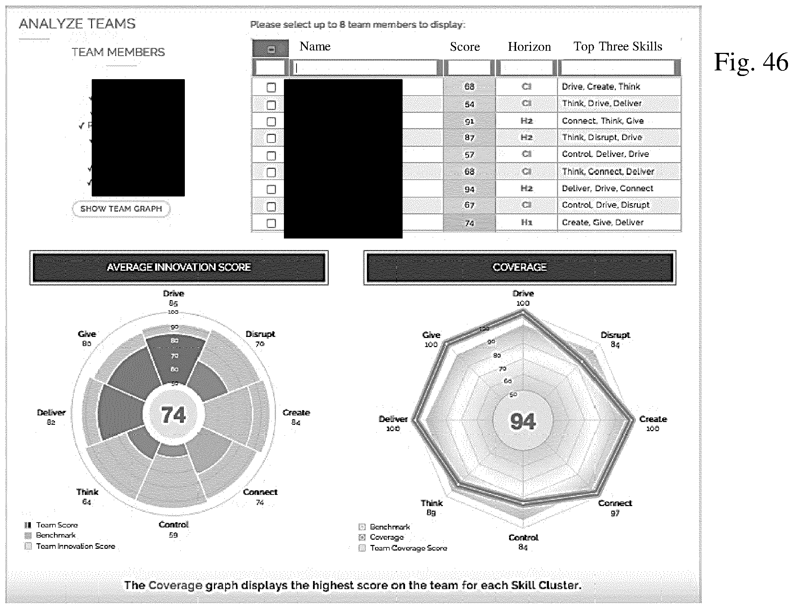

Companies can use the methodologies discussed herein to analyze existing teams and design new innovation teams, matching talent to purpose. FIG. 46 illustrates a software-assisted method for creating, analyzing and improving teams. As illustrated, an innovation profile of a team is calculated, based on the team members' innovation profiles. Teams can be designed by selecting members from a filterable list. Members can be selected by name, innovation score, innovation horizon, location, functional skills, and/or top 3 skills, in various embodiments.

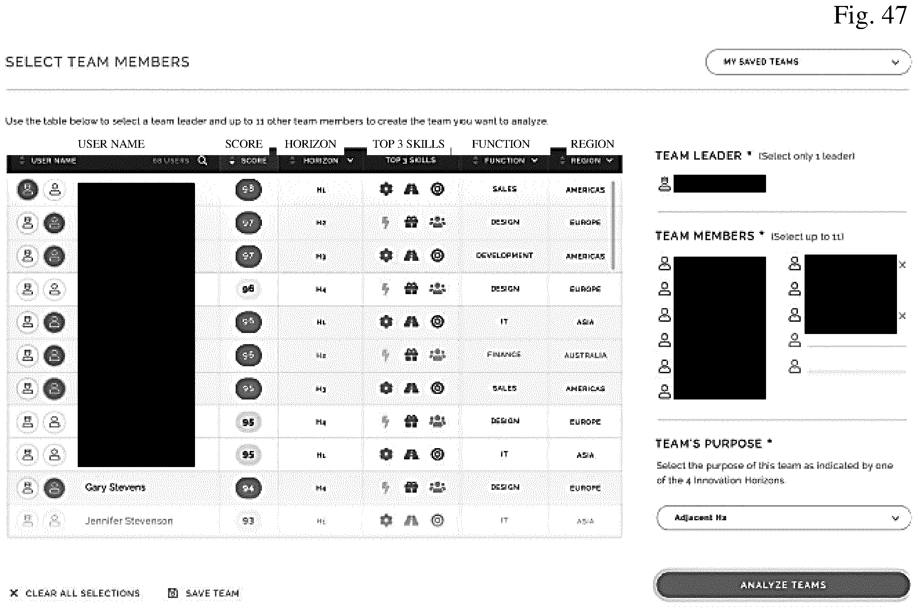

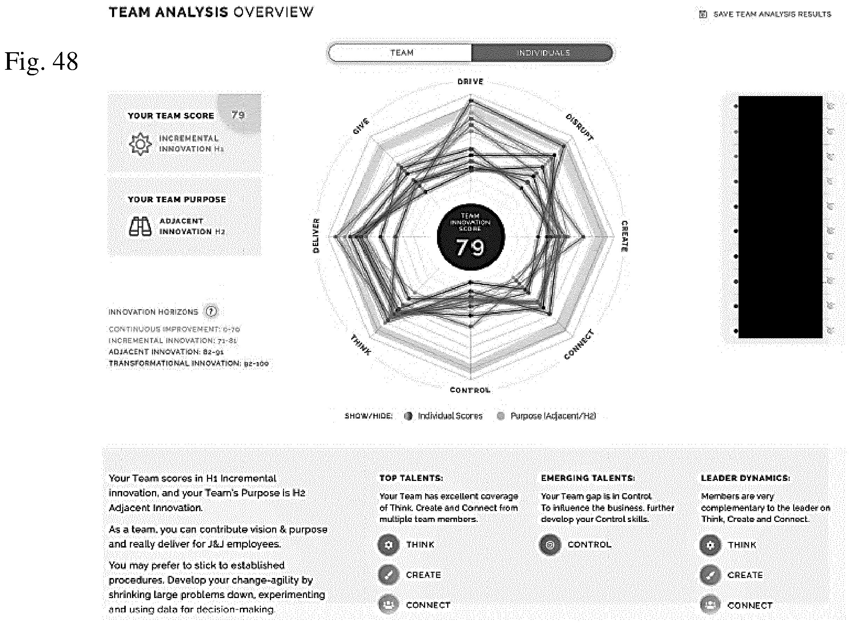

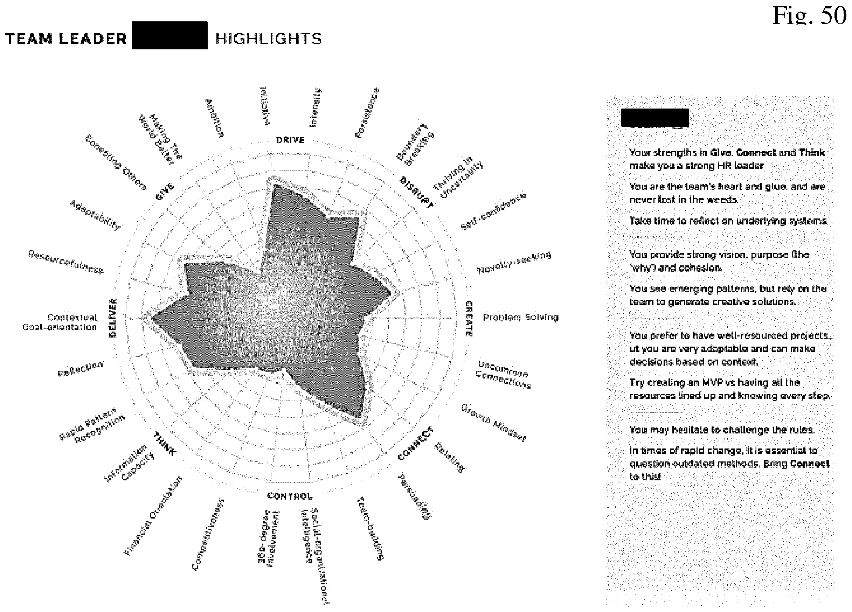

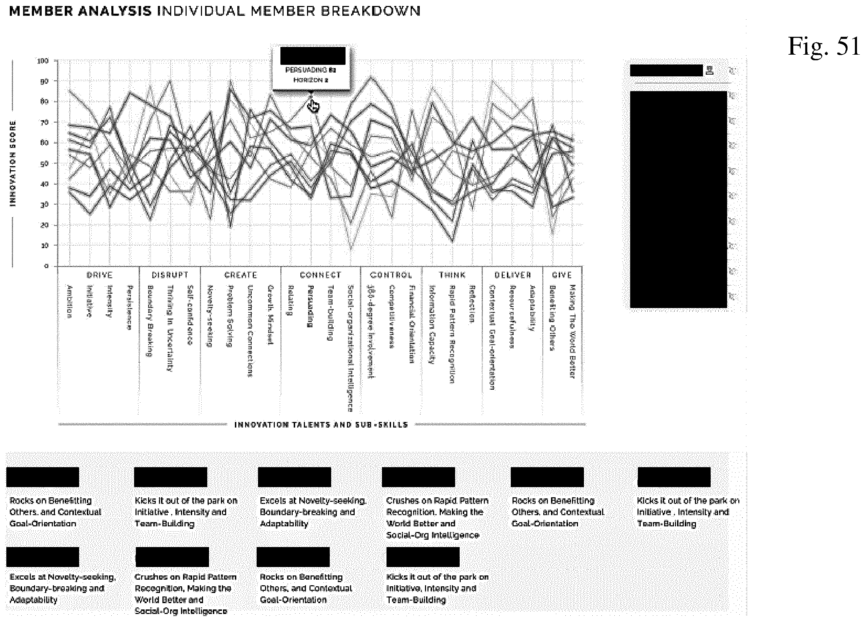

The method is described with reference to FIGs. 47-51. As shown in FIG. 47, the user is allowed to select the team leader, and also to select the team's purpose (one or two adjacent innovation horizons), and then view the fit between the leader and the team purpose, FIG. 48. The selection can be made through a graphical user interface. The user can also view through the interface the innovation profiles of all team members in relation to 8 skills, 26 subskills and the team purpose, the innovation profiles being retrieved from database records.

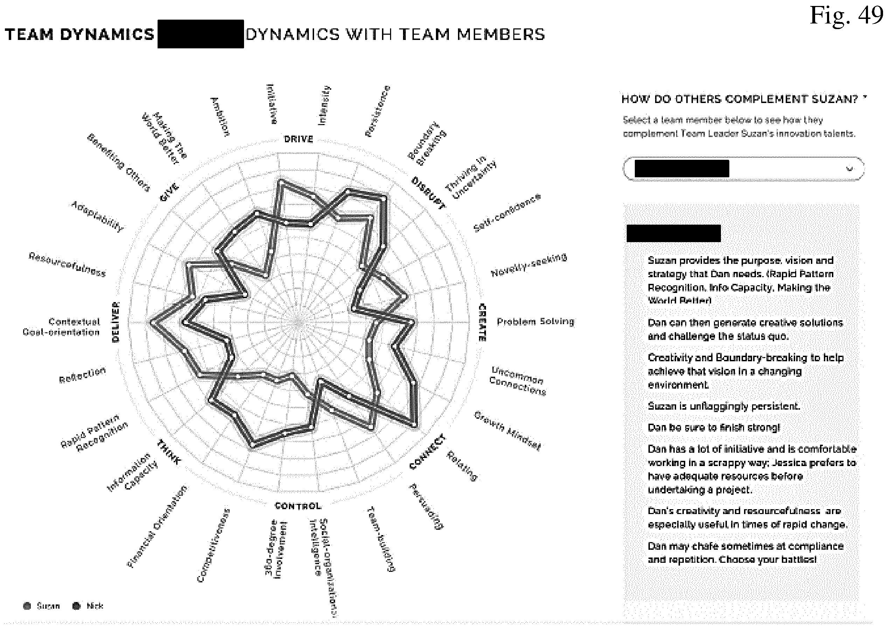

In FIGs. 49-51 automated insights are provided regarding the ways in which the team members complement the leader and each other. Automated insights can also be provided concerning where the leader needs to support team members, based on their weaknesses, and where the team leader can lean on a member, based on their strengths. Insights can be short statements stored in a database and cross-referenced by relationships between differences in skills and subskills between the leader and the members, or relationships between team purpose and a member's skill, or between innovation horizons, for example. When such relationships are identified in a team, stored insights can be provided. Additionally, tips on how the team can be improved, e.g. by adding a member who is strong on Connect, or by taking training or being mentored can be provided. Here, too, tips are provided by identifying relationships between innovation horizons, team purpose, and the 8 skills in order to select stored tips from a database as generally described with reference to FIG. 10.

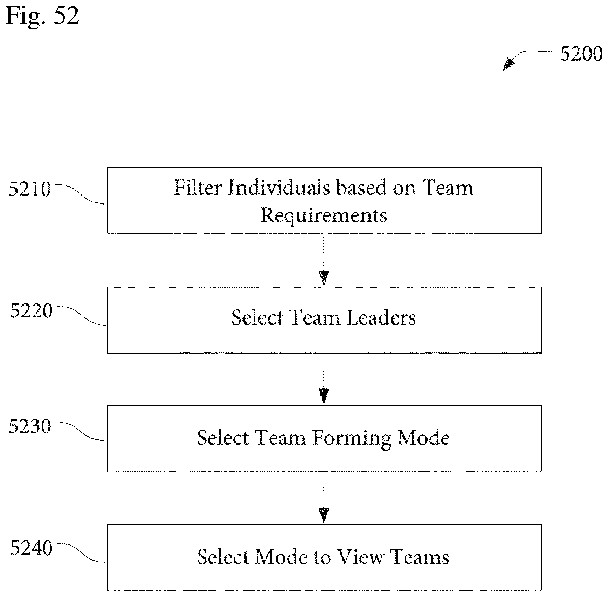

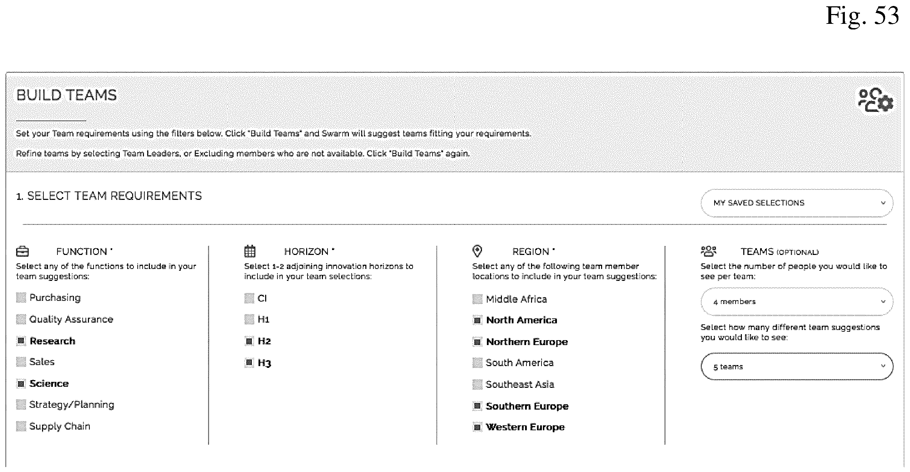

FIG. 52 is a flowchart representation of another method 5200 of the present disclosure for creating teams. The method 5200 can be viewed as an algorithmically-driven method to create, analyze and improve teams. FIG. 53 also serves to illustrate method 5200 in that optimal teams are simultaneously designed through an automated system by allowing the user to set team requirements, including but not limited to the members' functional skills, innovation horizon based on their innovation profiles, location of team members, the number of teams, and sizes of the teams. Method 5200 can be, in some embodiments, an extension of the method 3200 of FIG. 32, itself optionally an extension of FIG. 11. Thus, some embodiments of the present disclosure include steps of all three methods, or just of methods 1100 and 5200.

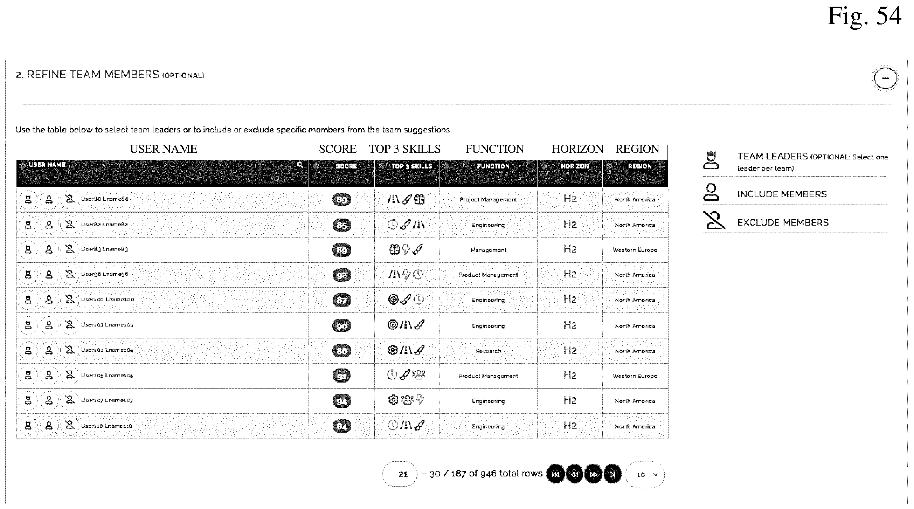

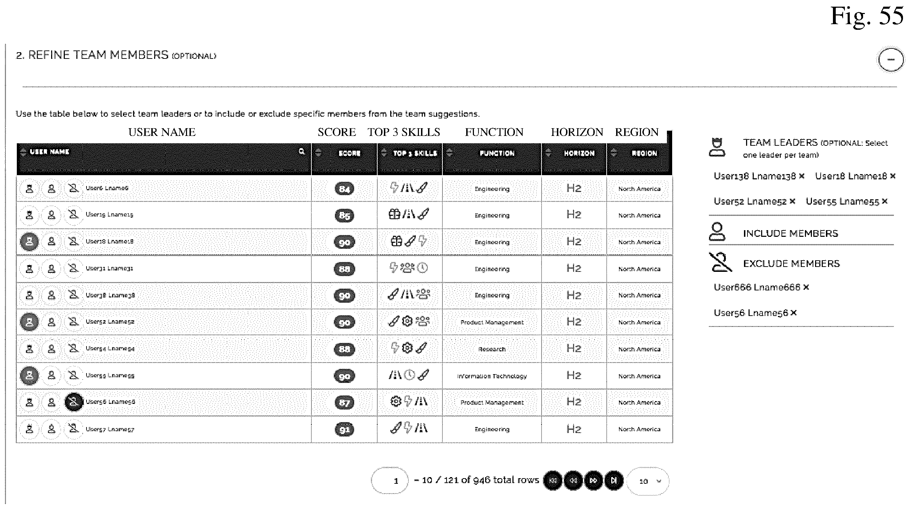

In a step 5210, illustrated by FIG. 54, the plurality of individuals are filtered based on the team requirements, and a list of potential team members meeting the requirements can be displayed. In a step 5220 the list of potential team members can be refined by allowing the user to select one or more team leaders. The step is illustrated by FIG. 55. If there is more than one team, the several team leaders are automatically assigned to different teams. The user optionally can mark members that must be included on the resulting teams, and/or can mark members who must be excluded from the resulting teams.

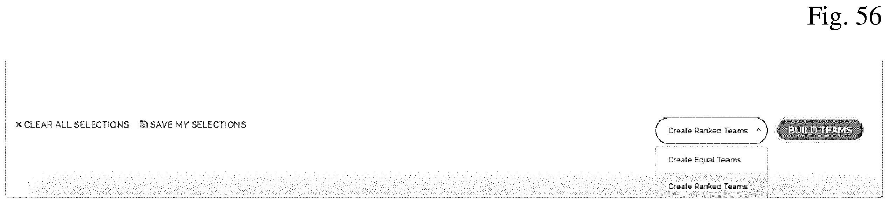

FIG. 56 illustrates another step 5230. In step 5230 the user is allowed to select between two modes of forming teams, ranked teams in which teams are designed from strongest ¬¬to weakest, in view of the requirements, or equal teams in which innovation talent is distributed as equally as possible across the teams. The resulting teams, in either ranked or equal team mode, are created and optionally displayed. In still other embodiments teams can be automatically based on a variety of other requirements such as personality, education, years of experience and thinking style, etc. In some embodiments, each job function in the Profiler survey is pre-assigned to one of three categories of thinking style, deductive/analytical, inductive/lateral, or hybrid.

In some embodiments, if the user chooses to form ranked teams, then a) the system first searches for the highest-scoring person who fits the team requirements, and places them on the first team. The system then finds the second-highest scoring person and places them on the second team, which continues until the top-scoring persons are placed on different teams to meet the required number of teams. To complete the first team, the system then searches for the next highest-scoring, not-yet-assigned person, whose innovation skills and thinking style are complementary to the first person placed on the team. This method ensures that each team has the highest possible innovation score, with coverage of all 8 innovation skills, and a balance of deductive and inductive thinking styles.

For example, if the first person placed on Team 1 has an overall innovation score of 96, strengths in Disrupt and Control, and was in an analytical function such as Engineering requiring a deductive thinking style, then the second person chosen would be the next highest scoring person, with a score of 92, with strengths in Create and Connect, and from a lateral-thinking or inductive thinking style function such as Marketing. The third person chosen would have the next-highest innovation score, complimentary innovation strengths to the first two persons, and come from a function requiring a hybrid thinking style, such as architecture.

If the user instead chooses to form equal teams, then once the first pass of team assignments is complete, the system distributes in the second pass the next-highest scoring persons to remaining teams in reverse order, to ensure overall balance on all the teams, until the desired number of teams is formed. In the second pass of placing team members, the highest scoring persons are placed in reverse to ensure the final teams are roughly equal in innovation skills. Again, this serves to balance teams with members that have both deductive and inductive thinking styles.

In another embodiment of the method, the system also searches for personality in order to produce teams with the desired level of sameness vs polarity. In yet another embodiment of the method, the system searches a detailed job skill taxonomy in order to create teams with precise and constantly updated job skills needed in the market. The taxonomy is constantly updated by virtue of scanning public job postings for emergent phrases, such as "virtual reality developer" or "user experience designer" vs using static or historical data for classifying job skills.

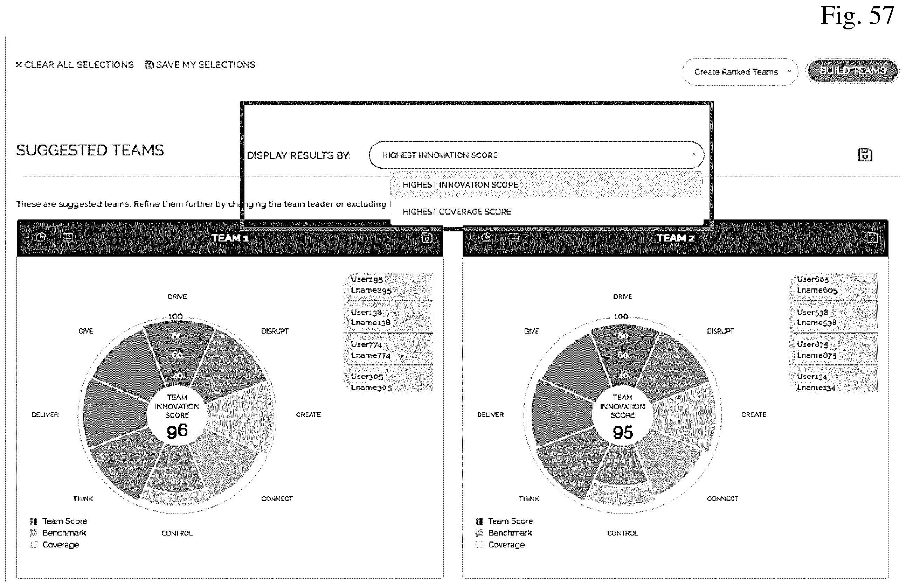

FIG. 57 illustrates a step 5240 in which the user is allowed to select a mode for viewing the resulting teams. Modes include by the Average Innovation score or by the Coverage score. The Coverage score is calculated based on the sum of the highest score of any individual on the team on each of the 8 innovation skills, divided by 8. Coverage scores are used in FIG. 57.

Further steps of method 5200 can include allowing the user to save and name their teams, to save the resulting teams singly or collectively, in a variety of file formats. Periodic feedback can be gathered from team members on metrics such as the team's productivity and satisfaction, whereby the team design algorithm can be improved based on the periodic feedback. Additionally, the impact of team leaders on their team's performance can be predicted and measured, and the recommended team design can be adjusted accordingly. Actionable feedback can be generated and provided to the team leader, and to team members, to optimize the team's performance.

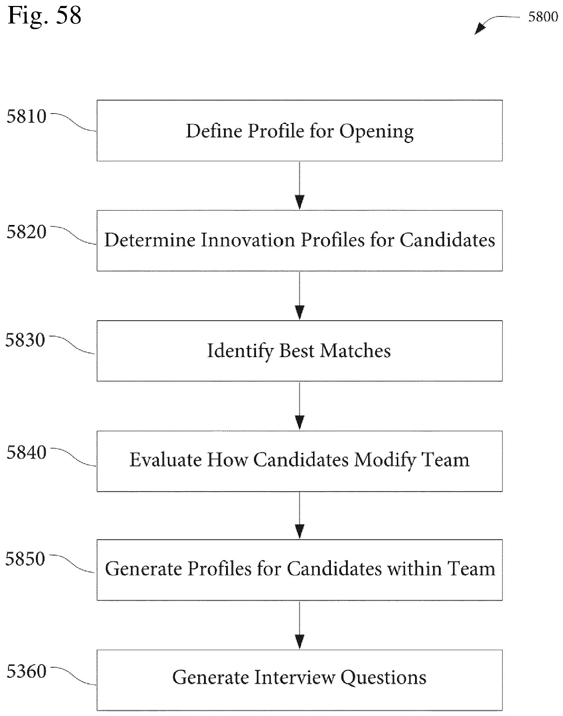

FIG. 58 is a flowchart representation of another method 5800 of the present disclosure for selecting candidates for job openings. Method 5800 can be, in some embodiments, an extension of the method 5200 of FIG. 52, itself optionally an extension of the prior described methods. Thus, some embodiments of the present disclosure include steps of any or all of these methods.

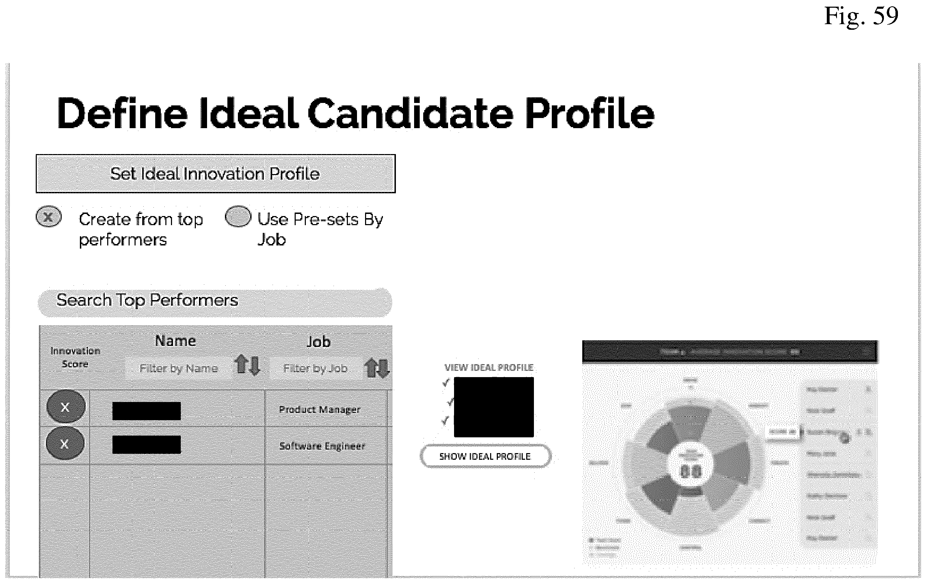

In a step 5810, illustrated by FIG. 59, an ideal profile is defined for an open position, using, for example, top performers in the role, pre-sets by job, or custom fields. In a step 5820 the innovation profiles of prospective new employees are determined, and optionally actionable recommendation are made based on their innovation profiles and other factors.

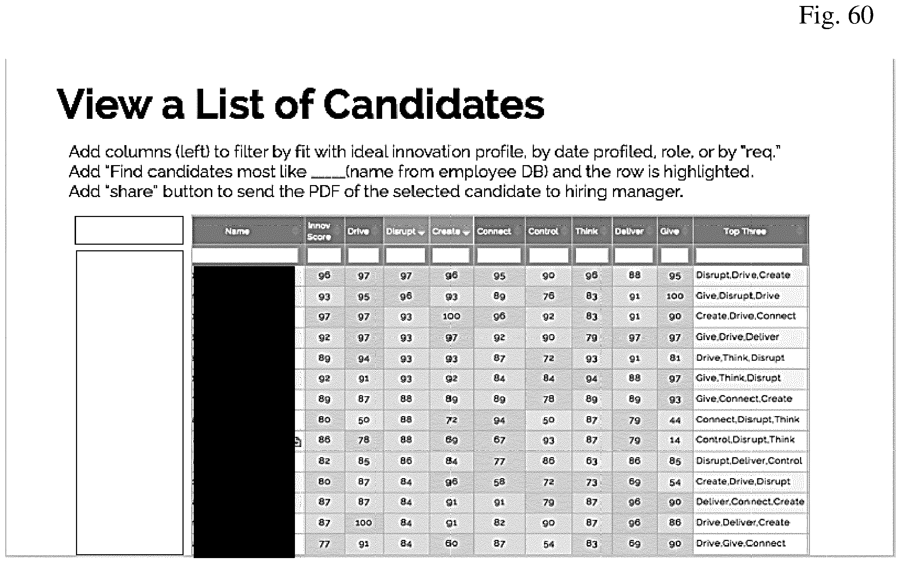

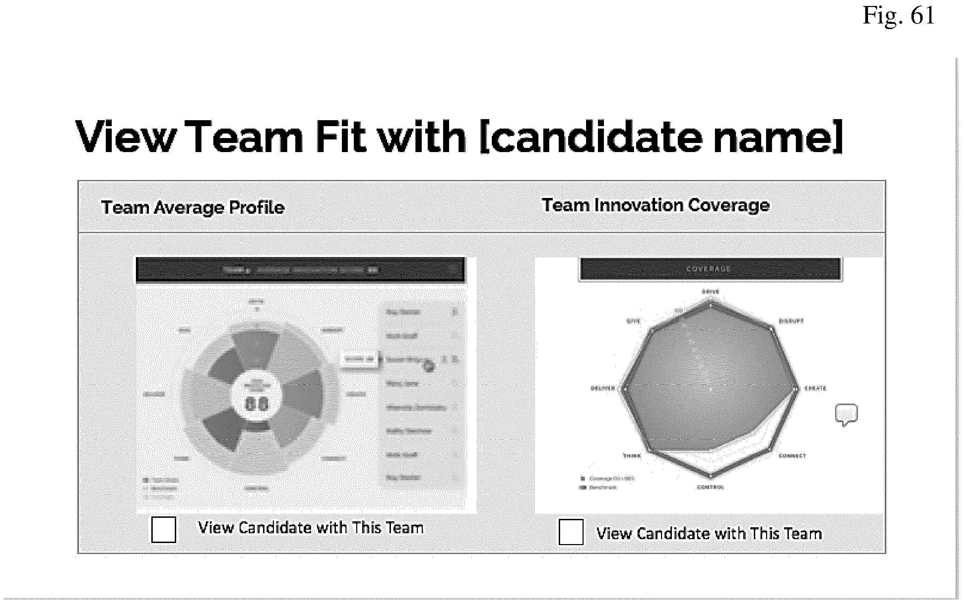

In a step 5830 the candidates best matching the specifications for the open position are identified, as illustrated by FIG. 60. In a step 5840, illustrated by FIG. 61, the various candidates are compared to the team with the open position to identify the impact of each candidate on the team with the open position, to recommend the candidate that most improves the team's innovation profile, and to identify teams that can most benefit from a given candidate's innovation skills.

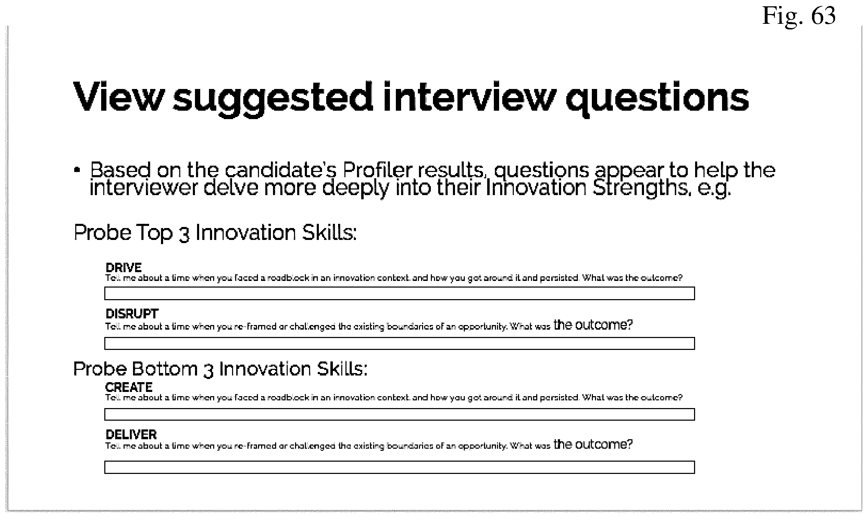

In a step 5850, illustrated by FIG. 62, a detailed profile is generated for each candidate with respect to the team with the open position. The detailed profile can show their fit with the role and their fit with the team. In a step 5860, illustrated by FIG. 63, interview questions for each candidate are generated based on their innovation profiles. The questions are designed, in some embodiments, to elicit empirical evidence of the candidate's innovation profile.

The corresponding structures, materials, acts, and equivalents of all means or step plus function elements in the claims below are intended to include any structure, material, or act for performing the function in combination with other claimed elements as specifically claimed. The description of the present technology has been presented for purposes of illustration and description, but is not intended to be exhaustive or limited to the present technology in the form disclosed. Many modifications and variations will be apparent to those of ordinary skill in the art without departing from the scope and spirit of the present technology. Exemplary embodiments were chosen and described in order to best explain the principles of the present technology and its practical application, and to enable others of ordinary skill in the art to understand the present technology for various embodiments with various modifications as are suited to the particular use contemplated.

Aspects of the present technology are described above with reference to flowchart illustrations and/or block diagrams of methods, apparatus (systems) and computer program products according to embodiments of the present technology. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. Arrows in drawings between steps are not to be construed as requiring the steps to be performed in order, steps of the methods described herein can be performed in various orders, and steps can be performed simultaneously.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present technology. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In the following description, for purposes of explanation and not limitation, specific details are set forth, such as particular embodiments, procedures, techniques, etc. in order to provide a thorough understanding of the present invention. However, it will be apparent to one skilled in the art that the present invention may be practiced in other embodiments that depart from these specific details.

Reference throughout this specification to "one embodiment" or "an embodiment" means that a particular feature, structure, or characteristic described in connection with the embodiment is included in at least one embodiment of the present invention. Thus, the appearances of the phrases in "one embodiment" or in "an embodiment" or "according to one embodiment" (or other phrases having similar import) at various places throughout this specification are not necessarily all referring to the same embodiment. Furthermore, the particular features, structures, or characteristics may be combined in any suitable manner in one or more embodiments. Furthermore, depending on the context of discussion herein, a singular term may include its plural forms and a plural term may include its singular form. Similarly, a hyphenated term (e.g., "on-demand") may be occasionally interchangeably used with its non-hyphenated version (e.g., "on demand"), a capitalized entry (e.g., "Software") may be interchangeably used with its non-capitalized version (e.g., "software"), a plural term may be indicated with or without an apostrophe (e.g., PE's or PEs), and an italicized term (e.g., "N+1") may be interchangeably used with its non-italicized version (e.g., "N+1"). Such occasional interchangeable uses shall not be considered inconsistent with each other.

Also, some embodiments may be described in terms of "means for" performing a task or set of tasks. It will be understood that a "means for" may be expressed herein in terms of a structure, such as a processor, a memory, an I/O device such as a camera, or combinations thereof. Alternatively, the "means for" may include an algorithm that is descriptive of a function or method step, while in yet other embodiments the "means for" is expressed in terms of a mathematical formula, prose, or as a flow chart or signal diagram.

The terminology used herein is for the purpose of describing particular embodiments only and is not intended to be limiting of the invention. As used herein, the singular forms "a", an and the are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It is noted that the terms "coupled," "connected", "connecting," "electrically connected," etc., are used interchangeably herein to generally refer to the condition of being electrically/electronically connected. Similarly, a first entity is considered to be in "communication" with a second entity (or entities) when the first entity electrically sends and/or receives (whether through wireline or wireless means) information signals (whether containing data information or non-data/control information) to the second entity regardless of the type (analog or digital) of those signals. It is further noted that various figures (including component diagrams) shown and discussed herein are for illustrative purpose only, and are not drawn to scale.

If any disclosures are incorporated herein by reference and such incorporated disclosures conflict in part and/or in whole with the present disclosure, then to the extent of conflict, and/or broader disclosure, and/or broader definition of terms, the present disclosure controls. If such incorporated disclosures conflict in part and/or in whole with one another, then to the extent of conflict, the later-dated disclosure controls.

The terminology used herein can imply direct or indirect, full or partial, temporary or permanent, immediate or delayed, synchronous or asynchronous, action or inaction. For example, when an element is referred to as being "on," "connected" or "coupled" to another element, then the element can be directly on, connected or coupled to the other element and/or intervening elements may be present, including indirect and/or direct variants. In contrast, when an element is referred to as being "directly connected" or "directly coupled" to another element, there are no intervening elements present. The description herein is illustrative and not restrictive. Many variations of the technology will become apparent to those of skill in the art upon review of this disclosure. For example, the technology is not limited to use for stopping email threats, but applies to any messaging threats including email, social media, instant messaging, and chat.

While various embodiments have been described above, it should be understood that they have been presented by way of example only, and not limitation. The descriptions are not intended to limit the scope of the invention to the particular forms set forth herein. To the contrary, the present descriptions are intended to cover such alternatives, modifications, and equivalents as may be included within the spirit and scope of the invention as defined by the appended claims and otherwise appreciated by one of ordinary skill in the art. Thus, the breadth and scope of a preferred embodiment should not be limited by any of the above-described exemplary embodiments.

## Claims

1. A method comprising:
classifying, using a computer system (1), a plurality of individuals based on their innovation profiles stored in database records, each innovation profile including innovation skills and an innovation score for the individual;
determining an innovation horizon for each of the plurality of individuals based on their innovation profiles;
averaging the plurality of individuals by their innovation skills to produce averaged innovation skill scores;
ranking the plurality of individuals by innovation score; and
ranking the averaged innovation skill scores to identify the top three skills.

2. The method of claim 1, further comprising displaying on a video display (35) of the computer system (1) the plurality of individuals ranked by innovation score, and displaying on the video display the ranked averaged innovation skill scores.

3. The method of claim 1 or 2, wherein classifying the plurality of individuals includes classifying the plurality of individuals by innovation horizon.

4. The method of claim 1 or 2, wherein classifying the plurality of individuals includes classifying the plurality of individuals by job function, location, or date of hire.

5. The method of any of the preceding claims, further comprising displaying a graphical representation of an averaged innovation skill score relative to a benchmark.

6. A method for improving the innovation skills of a plurality of individuals, the method comprising:
setting innovation goals for one or more innovation skills, using a computer system (1), for each of the plurality of individuals;
inviting each of the plurality of individuals to an online training course to improve their innovation skills;
training the plurality of individuals through the online training course; and
sending a notification to an individual of the plurality of individuals upon meeting a threshold improvement for an innovation skill, representing progress towards an innovation goal of the set innovation goals.

7. The method of claim 6, wherein setting innovation goals is performed through a graphical user interface.

8. The method of claim 6 or 7, further comprising determining a return on investment.

9. The method of claim 8, wherein determining the return on investment includes
calculating a change in innovation scores, pre- and post- training, for the plurality of individuals,
calculating a value of a number of innovation proposals, the number of innovation proposals having been submitted through the innovation training by the plurality of individuals,
calculating innovation horizons for the number of innovation proposals, and calculating a change in innovation horizons for the plurality of individuals.

10. A method for creating a team comprising:
receiving, using a computer system (1), a selection of an innovation horizon from four possible innovation horizons, and a selection of a team leader from a plurality of team members;
displaying a fit between the team leader and the team purpose, the fit being shown graphically and with respect to 8 skills;
displaying innovation profiles of all of the team members in relation to the 8 skills and the team purpose;
displaying ways in which the team members complement the leader and each other with respect to the 8 skills.
